# EUROPÄISCHE PATENTANMELDUNG

(11) **EP 3 518 401 A1**
(43) Veröffentlichungstag der Anmeldung: **31.07.2019**
(21) Anmeldenummer: 18000959.9
(22) Anmeldetag: 12.12.2018
(51) Int. Cl.: H02M 1/12, H02M 7/493, H02M 7/487, H02M 1/00, H02M 7/483

(54) **DREIPHASIGER HYBRIDUMRICHTER**

(30) Priorität: 25.01.2018 DE 102018101679
(71) Anmelder: Karlsruher Institut für Technologie, 76131 Karlsruhe (DE)
(72) Erfinder: Bernet, Daniel, 76131 Karlsruhe (DE); Rollbühler, Christoph, 76131 Karlsruhe (DE); Schwendemann, Rüdiger, 77790 Steinach (DE); Stefanski, Lukas, 76133 Karlsruhe (DE); Winzer, Patrick, 88239 Wangen (DE); Hiller, Marc, 75015 Bretten (DE)

(57) **Zusammenfassung**

Vorrichtung **(100A),** umfassend eine Schaltungsanordnung **(105)** mit einem dreiphasigen Anschluss **(110),** wobei die Schaltungsanordnung **(105)** umfasst: eine erste dreiphasige Stromrichterschaltung **(115),** umfassend einen dreiphasigen Anschluss **(120)** und eine Kommunikationsschnittstelle **(125);** eine zweite dreiphasige Stromrichterschaltung **(130),** umfassend einen dreiphasigen Anschluss **(135)** und eine Kommunikationsschnittstelle **(140);** eine Kopplungseinheit **(145),** umfassend einen ersten dreiphasigen Anschluss **(150)** und einen zweiten dreiphasigen Anschluss **(155);** und eine Steuer- oder Regeleinheit **(160)** mit einer Kommunikationsschnittstelle **(165); dadurch gekennzeichnet, dass** die erste Stromrichterschaltung **(115)** und die zweite Stromrichterschaltung **(130)** elektrisch leitfähig über die Kopplungseinheit **(145)** derart miteinander gekoppelt sind, dass der Anschluss **(120)** elektrisch leitfähig mit dem ersten Anschluss **(150)** gekoppelt ist; und der zweite Anschluss **(155)** mit dem Anschluss **(135)** der Stromrichterschaltung elektrisch leitfähig gekoppelt ist; und wobei der zweite Anschluss **(155)** und der Anschluss **(135)** der Stromrichterschaltung elektrisch leitfähig mit dem Anschluss **(110)** der Schaltungsanordnung gekoppelt sind; und wobei die drei Kommunikationsschnittstellen **(125, 140, 165)** gemeinsam gekoppelt sind.

## Beschreibung

Die Erfindung betrifft ein Schaltungskonzept für eine Vorrichtung zum bidirektionalen Umrichten von Gleichspannungen bzw. dreiphasigen Wechselspannungen, insbesondere Vorrichtungen, die dabei als dreiphasiger Hybridumrichter ausgelegt sind.

### Technisches Gebiet

Gemäß der Klassifizierung nach [1, S. 3f] gehört das hierin of-fenbarte Schaltungskonzept zur Klasse der dreiphasigen Umrichter mit Gleichspannungszwischenkreis. Solche Umrichter werden zur bidirektionalen Umwandlung von Gleichspannungen (engl. Direct Current (DC)) und dreiphasigen Wechselspannungen (engl. Alternating Current (AC)) (DC - 3AC bzw. 3AC - DC) eingesetzt. Das hierin offenbarte Schaltungskonzept basiert auf der Trennung von Energie- und Spannungsquelle innerhalb- der geschlossenen Einheit eines dreiphasigen Umrichters. Wobei deren parallele Zusammenschaltung durch eine. Kopplungsinduktivität zu einem dreiphasigen parallelen hybriden Umrichterkonzept führt, d.h. ein dreiphasiger Hybridumrichter. Als Energie- und Spannungsquellen können sowohl dreiphasige Zwei- und Mehrpunktumrichter als auch lineare Leistungsverstärker zum Einsatz kommen.

### Stand der Technik

Industrielle bzw. konventionelle Umrichter können gemäß [1, S. 3f] und [2, S. 3ff] klassifiziert werden. Eine Klasse diesbezüglich betrifft sogenannte Direktumrichter, die sich durch ihre Eigenschaft auszeichnen, dass sie keinen dezentralen bzw. zentralen Energiespeicher aufweisen. Die Ausgangsspannung wird durch abschnittsweises Zuschalten der Eingangsspannungen generiert. Die erzeugte Ausgangsspannung besteht somit aus einzelnen Abschnitten der Eingangsspannung, weshalb zur Generierung einer sinusförmigen Ausgangsspannung ein Filter notwendig ist. Durch das Fehlen eines Energiespeichers ist die Ausgangsseite direkt mit der Eingangsseite gekoppelt. Dies führt einerseits zu einem begrenzten Aussteuerbereich und andererseits zu einer stärkeren Kopplung von Oberschwingungen der Eingangsseite auf die Ausgangsseite und umgekehrt (vgl. [3 S. 23ff]). Für den Fall, dass die Frequenz der Eingangsseite in der gleichen Größenordnung wie die Frequenz der Ausgangsseite liegt, kommt es zu einer ungleichmäßigen Belastung der Halbleiter (vgl. [4, S. 312]). Dies führt zu einer schlechten Ausnutzung des Umrichters, da alle Halbleiter auf Grund dieser unsymmetrischen Belastung größer dimensioniert werden müssen. Relevanter für erfindungsgemäße Vorrichtungen sind dabei Umrichter aus der Klasse der Gleichspannungszwischenkreisumrichter gemäß [1, S. 3f] und [2,S. 3ff], die zwar in ihrer technischen Wirkung dem Gegenstand des Anspruchs 1 offenbarten Hybridumrichter ähnlich, jedoch demgegenüber bspw. einen erhöhten bzw. gesteigerten Volumenbedarf haben, schwerer sind, erhöhte bzw. gesteigerte Oberschwingungsbelastung haben oder kostenintensiver sind.

Gleichspannungszwischenkreisumrichter können in folgende zwei hierfür relevante Unterklassifizierungen aufgelistet werden:
1. Gleichspannungszwischenkreisumrichter mit zentralem Zwischenkreis, wobei hier insbesondere folgende drei Klassen aufgeführt werden:
   a. Two-level (2-L) Voltage Source Converter (VSC)(2-L-VSC),
   b. Multilevel (n-L) Neutral Point Clamped Converter (NPC) (3-L-NPC, 3-L-TNPC, 5-L-NPC, n-L-NPC);
   c. Multilevel (n-L) Flying Capacitor Converter (FLC) (3-L-FLC, 5-L-FLC, n-L-FLC)
   d. Linearverstärker
      und
2. Gleichspannungszwischenkreisumrichter mit verteiltem Zwischenkreis, umfassend folgende bekannte Ausführungsformen:
   a. Cascaded H-Bridge Voltage Source Converter (CHB),
   b. Modular Multilevel Converter (MMC).
   c. Cascaded H-Bridge STATCOM Converter (CHBS)

Hierbei wurden die, in diesem Fachgebiet, üblichen englischen Begriffe zur Klassifizierung verwendet. Unter einem Converter wird ein Umrichter verstanden, der eine bidirektionale Umwandlung von Gleichspannungen und dreiphasigen Wechselspannungen durchführt.

Der 2-L-VSC besteht aus 3 Halbbrücken. Jede Phase kann hierbei entweder mit dem positiven oder negativen Zwischenkreispotential verbunden werden. Die Ausgangsspannung ist eine Rechteckspannung, weshalb zwingend ein Filter für die Erzeugung einer sinusförmigen Spannung notwendig ist. Aufgrund einer notwendigen Regelreserve muss die Zwischenkreisspannung größer als die Amplitude der Ausgangsspannung sein. Der Oberschwingungsgehalt ist bei gleicher Zwischenkreisspannung größer als bei sogenannten Multilevelumrichtern.

Bei den 3-L-Umrichtern kann man zwischen NPC, T-type NPC (TNPC), Active NPC (ANPC) und FLC unterscheiden. Alle vier Topologien sind in der Lage 3 Spannungsniveaus zu stellen. Hierdurch ist der Oberschwingungsgehalt der Ausgangsspannung geringer und es wird ein kleineres Filter benötigt. Beim 3-L-NPC fällt über jedem Halbleiter nur die halbe Zwischenkreisspannung ab. Hierdurch können bei gleicher Zwischenkreisspannung Halbleiter mit niedriger Sperrspannung als bei einem 2-L-VSC gleicher Zwischenkreisspannung gewählt werden, wodurch die Durchlassverluste pro Halbleiter geringer sind. Der 3-L-NPC wird so betrieben, dass immer zwischen dem positivenPotential und dem mittleren bzw. zwischen dem negativen und dem mittleren umgeschaltet wird. Hierdurch fällt während des Kommutierungsvorgangs nur die halbe Zwischenkreisspannung ab und die Schaltverluste können reduziert werden. Der Zwischenkreis besteht bei den 3-L-Umrichter aus zwei in Serie geschalteten Kapazitäten. Um zu garantieren, dass sich die Spannung symmetrisch zwischen den beiden Kapazitäten aufteilt, muss ein zusätzlicher Regelkreis implementiert werden, der die Symmetrierung gewährleistet. Der ANPC unterscheidet sich zum NPC darin, dass antiparallel zu den Mittelpunktdioden noch zwei zusätzliche Schalter hinzugeschalten werden. Dies ermöglicht eine gleichmäßigere Verlustverteilung zwischen den Halbleitern und somit eine höhere Ausnutzung der Schaltung. Der TNPC unterscheidet sich zum NPC und ANPC dahin, dass die Halbleiter im Zweig die gesamte Zwischenkreisspannung sperren müssen, lediglich die Halbleiter im Pfad zum Nullpunkt können für die halbe Zwischenkreisspannung ausgelegt werden. Für den Fall, dass das positive oder negative Potential gestellt werden soll, führt beim TNPC nur ein Halbleiter Strom, wodurch die Durchlassverluste reduziert werden. Unabhängig der verwendeten drei- - stufigen Topologie, muss ein Netzfilter zwischen Umrichter und Netz installiert werden, um die Injektion der Harmonischen in das Netz zu reduzieren.

Ein FLC lässt sich mit beliebig vielen Spannungsstufen aufbauen. Der Schaltungsaufwand steigt jedoch an. Es sind n-1 Kapazitäten unterschiedlicher Nennspannung erforderlich und der Halbleiterbedarf steigt mit 2 (n-1). Durch die Zunahme an Komponenten nimmt die Zuverlässigkeit der Schaltung ab. Wie bei den 3-L-Umrichtern muss bei den n-L-NPC und FLC ein Symmetrierungsregler implementiert werden. Der Aufwand für die Symmetrierung steigt dabei mit zunehmender Anzahl an Spannungsstufen. Falls beim FLC alle oberen Schalter eingeschaltet werden, entspricht die Ausgangsspannung der halben Zwischenkreisspannung. Durch Wahl der jeweils eingeschalteten Schalter kann die Ausgangsspannung entsprechend der Sollspannung eingestellt werden. Beim 5L-ANPC wird im Vergleich zum 3-L-ANPC ein zusätzlicher Kondensator mit der halben Spannung an den Ausgang angeschlossen. Mit Hilfe der zusätzlichen Schalter kann die zusätzliche Ausgangskapazität entweder hinzugeschaltet oder überbrückt werden. Somit kann der Spannungsabfall entweder hinzuaddiert, abgezogen oder nicht berücksichtigt werden. Im Vergleich zu den 3-L-Umrichtern besitzen die n-Level Umrichter eine Ausgangsspannung mit geringerem Oberschwingungsgehalt. Dies führt zu einem geringen Filteraufwand. Die Zuverlässigkeit der Schaltung nimmt jedoch mit zunehmender Anzahl an Level stark ab. Zudem müssen die Energiespeicher so ausgelegt werden, dass sie bei Volllast die Pulsation der Ausgangsleistung kompensieren.

Der MMC und der CHB unterscheiden sich zu den bisherigen Umrichtern darin, dass sie durch die Verwendung von n identischen Einheiten mit je einem eigenen Energiespeicher und einer Halbbrückenschaltung oder Vollbrückenschaltung, im Folgenden Zelle genannt, einen verteilten Zwischenkreis besitzen. Der Aufwand an Energiespeichern ist deshalb beim MMC und CHB im Vergleich zu Umrichtern mit zentralem Energiespeicher größer. Bei dem CHB wird jede einzelne Zelle über einen Transformator und einen Gleichrichter mit Energie versorgt. Dies bietet den Vorteil, dass keine Regelung für die Symmetrierung der einzelnen Zellspannungen notwendig ist. Es steigt jedoch der schaltungstechnische Aufwand, da entweder für jede Zelle ein eigener Transformator oder ein Transformator mit sehr vielen Abgriffen auf der Sekundärseite erforderlich ist. Im Vergleich zu anderen Umrichtern führt dieser Aufwand zu höheren Kosten (vgl. [5]). Aus diesem Grund werden beim CHB häufig 5L-Zellen verwendet, wodurch die Anzahl der Zellen sinkt. Im Vergleich zu den Multilevelumrichtern mit zentralem Zwischenkreis bieten MMC und CHB die Möglichkeit eines redundanten Aufbaus, d.h. die Umrichter können auch bei Ausfall einer Zelle weiterhin ihre Funktion erfüllen. Betrachtet man die einzelne Zelle des CHB kann durch Wahl der eingeschalteten Schalter entweder die Zellspannung zur Ausgangsspannung hinzuaddiert, abgezogen oder überbrückt werden. Die gleiche Steuerung wird auch beim MMC verwendet. Der MMC besitzt im Vergleich zum CHB keine Zelleinspeisung. Hierdurch reduziert sich der Schaltungsaufwand erheblich. Im Gegenzug nimmt jedoch der Regelungsaufwand zu, da die Spannung der einzelnen Zellen symmetriert werden muss. Bei geringen Frequenzen des Ausgangsstroms muss ein großer Symmertrierungsstrom verwendet werden, um die Zellspannung auf einem Niveau zu halten. Hierdurch nimmt der Systemwirkungsgrad ab.

Bei den Cascaded H-Bridge STATCOM Convertern (CHBS) wird, ähnlich zum CHB, in jeder Phase eine beliebige Anzahl von Vollbrückenzellen in Reihe geschaltet, jedoch ist aufgrund der fehlenden Einspeisungen der Zellen keine Wirkleistungsübertragung durch den CHBS möglich. Dabei können die Phasen im Stern oder im Dreieck verschaltet werden, wodurch sich verschiedene Freiheitsgrade für den Regelungsentwurf ergeben. Die fehlende Zelleinspeisung macht sowohl eine Spannungssymmetrierung der Zellen einer Phase als auch der Zellen unterschiedlicher Phasen erforderlich. Für eine Dreiecksschaltung kann dies durch die Einprägung von Kreisströmen und für eine Sternschaltung durch die Stellung von Gleichtaktspannungen erfolgen.

Ein aktives Filter ist ein leistungselektronisches Gerät, das vorrangig zur Kompensation von Oberschwingungsströmen/Verzerrungsströmen, die von nichtlinearen Lasten oder Quellen ausgehen, genutzt wird (vgl. [6, pp. 2321-2322], [7], [8] und [9]). Häufigen Einsatz finden diese vor allem in umrichterbetriebenen Anlagen zur Kompensation von Netzrückwirkungen und treten hierbei als zusätzliche Systemeinheit auf. Ebenfalls ersichtlich ist, dass aktive Filter mit einer zusätzlichen Drossel an das bestehende System gekoppelt werden und somit eine Stromquelle darstellen. Durch Einprägen gegenphasiger Stromkomponenten können harmonische Ströme kompensiert werden (vgl. [10]). Durch die Kopplung des aktiven Filters ändert sich die Impedanz bzw. die Übertragungsfunktion des Gesamtumrichtersystems an den Ausgangsklemmen (vgl. [11]). Aktive Filter müssen daher an eine bestehende Umrichteranlage angepasst werden, um die Anforderungen an das Spektrum und die Amplituden der zu kompensierenden Harmonischen zu erfüllen.

Hybride Umrichterkonzepte sind bereits bekannt aus der einphasigen Anwendung, bspw. Parallele Hybridumrichter, wobei erste parallele Schaltungskonzepte hierzu bereits 1986, (vgl. [11]) und 1991 (vgl. [12]) bzw. 1995 (vgl. [13]) veröffentlicht und erforscht (vgl. [14] und [15]) wurden. Die Konzepte beschreiben eine Umrichterstruktur, die aus der Kombination eines Linearverstärkers und eines Zweipunktumrichters besteht. Die Konzepte sind stets einphasig beschrieben und arbeiten zumeist mit einem einfachen Hystereseregler. Ein Rückleiter von der Last zum Mittelpunkt des gemeinsamen, geteilten Gleichspannungszwischenkreises wird somit vorausgesetzt. Dies erfordert eine zusätzliche Vorrichtung zur Symmetrierung der Spannungen der Zwischenkreiskapazitäten.

Eine zweite Klasse der Hybridumrichtertopologien stellen die seriellen Hybridumrichterkonzepte dar. Hierbei wird eine n-L-Umrichterstruktur um eine zusätzliche Linearverstärkerzelle erweitert (vgl. [16] und [17]) oder am Ausgang kapazitiv eingekoppelt (vgl. [11] und [18]). Die Konzepte sind stets einphasig beschrieben. Nachteil von seriellen Topologien gegenüber parallelen Topologien ist, dass die für die Ausgangsspannung verantwortliche Komponente stets auf den gesamten Laststrom ausgelegt werden muss und daher aufwändig aufzubauen ist.

In [22] wird ein serieller Hybridumrichter zum Einsatz als leistungsstarke Spannungsquelle mit hoher Bandbreite vorgestellt. Dabei erfolgt die Reihenschaltung eines leistungsstarken Modularen-Multiphasen-Multilevel Umrichters und einer leistungsarmen Vollbrückenschaltung. Die Schaltfrequenz der Vollbrückenschaltung kann aufgrund der geringeren Leistung deutlich oberhalb der Schaltfrequenz des leistungsstarken Umrichters liegen, wodurch ein leistungsstarkes Gesamtsystem mit einer hohen resultierenden Schaltfrequenz entsteht. Aufgrund der seriellen Topologie besteht wie oben beschrieben der Nachteil, dass die leistungsarme Vollbrücken-Schaltung den gesamten Laststrom führen muss.

Grundlegende Neuerung der Erfindung gegenüber bekannten Hybridumrichterkonzepten (vgl. [11], [12], [13], [14] und [1-5]) ist eine ganzheitliche, dreiphasige Beschreibung der Umrichter- und Regelungsstruktur für parallele Hybridumrichterkonzepte mit Gleichspannungszwischenkreisumrichtern. Dadurch ergeben sich neue Anwendungsfelder:
- Betrieb von Drehstrommaschinen,
- Betrieb am dreiphasigen Netz,
- Erzeugung eines dreiphasigen Inselnetzes,
- Nutzung als frei einstellbare dreiphasige (Prüf-) Spannungsquelle, oder als
- Emulationsumrichter (Emulation von elektrischen Maschinen oder dreiphasigen Netzen);
sowie folgende Vorteile für den dreiphasigen, symmetrischen Betrieb:
- kein Gleichspannungszwischenkreismittelpunkt notwendig,
- kein Rück-/Neutralleiter,
- keine Symmetrierung der Spannungen der Zwischenkreiskondensatoren, und
- neue regelungstechnische Betrachtungen, welche die effektive Schaltfrequenz der Energiequelle reduzieren.

Des Weiteren ergeben sich durch die neuen dreiphasigen Verschaltungskonzepte folgende Vorteile:
- Gesteigerter Wirkungsgrad bei sehr guter Spannungsqualität
- Einfache und kostengünstige Steigerung des Ausgangsstroms einer leistungselektronischen Schaltung mit guter Ausgangsspannungsqualität

In [19] und [20] wird der CSI/VSI (Current Source Inverter / Voltage Source Inverter) Tandemumrichter vorgestellt und untersucht. Unter einem Inverter wird in diesem Patent ein Umrichter verstanden, der eine bidirektionale Umwandlung von Gleichgrößen und dreiphasigen Wechselgrößen durchführt. Der CSI/VSI Tandemumrichter kombiniert eine Stromquelle in Form eines Gleichstromzwischenkreisumrichters (CSI) mit einer direkt gekoppelten Spannungsquelle in Form eines 2-L-VSC. Im Gegensatz dazu entsprechen in der vorgestellten Erfindung Energiequellen- und Spannungsquellenumrichter Gleichspannungszwischenkreisumrichtern, die durch eine Kopplungsinduktivität miteinander gekoppelt werden. Dadurch ergeben sich gegenüber dem CSI/VSI Tandemumrichter folgende Vorteile:
- Der durch den VSI zu kompensierende Strom beim CSI/VSI Tandemumrichter ist deutlich größer als bei der vorgestellten Erfindung. Dies ist im rechteckförmigen Ausgangsstrom des CSI begründet, der eine deutlich höhere Verzerrung aufweist als bei Verwendung eines Gleichspannungszwischenkreisumrichters in Verwendung mit einer Kopplungsinduktivität;
- Das Funktionsprinzip des CSI/VSI Tandemumrichter führt dazu, dass die durch den VSI zu kompensierende Stromverzerrung stark lastabhängig ist. Der konstante Zwischenkreisstrom des CSI führt dazu, dass der Strom des VSI bei sinkendem Laststrom zunimmt und erfordert eine lastabhärigige Auslegung des VSI. Bei der vorgestellten Erfindung ist die Strombelastung des Spannungsquellenumrichters demgegenüber lastunabhängig, sondern lediglich von der Schaltfrequenz sowie der Höhe der Zwischenkreisspannung des Energiequellenumrichters und der Kopplungsinduktivität abhängig;
- Aufgrund der vorangegangen Erläuterungen erlaubt die Schaltungskonfiguration der vorgestellten Erfindung (Kopplung von zwei Gleichspannungszwischenkreisumrichtern durch eine Kopplungsinduktivität) gegenüber dem VSI des CSI/VSI Tandemumrichter bezogen auf die Systemleistung eine deutlich leistungsärmere Auslegung des Spannungsquellenumrichters.

In [21] werden zwei 2-L-VSC-Umrichter mit gemeinsamem Gleichspannungszwischenkreis durch zwei Induktivitäten gekoppelt. Dabei übernimmt der Hauptumrichter die Lastregelung während der Hilfsrumrichter auf seinen eigenen Strom regelt und damit einer Stromquelle/einem aktiven Filter entspricht. Demgegenüber ist bei der vorgestellten Erfindung der Spannungsquellenumrichter direkt mit dem Ausgang verbunden und übernimmt durch die Stellung der Ausgangsspannung die Lastregelung.

Die beschriebenen Umrichter-Topologien benötigen zur Verbesserung der Ausgangsspannungsqualität passive LC- bzw. LCL Ausgangsfilter (L = Induktivität, C = Kapazität). Diese Filter bestehen aus Induktivitäten und Kapazitäten, die in Abhängigkeit von Resonanzfrequenzen und den zu dämpfenden Oberschwingungen frequenzabhängig ausgelegt werden. Demgegenüber erzeugt beim Hybridumrichter der aktive Spannungsquellenumrichter die Ausgangsspannung, sodass ein beliebiges Filterverhalten vorgegeben werden kann. Daraus ergeben sich gegenüber Umrichtern mit passivem Filter die oben beschriebenen Vorteile.

Aktive Filter stellen im' Gegensatz zu der hierin vorgestellten Vorrichtung eine zusätzliche Systemkomponente dar, deren Aufgabe es ist einen oberschwingungsbehafteten Strom zu filtern. Sie arbeiten demnach als Stromquelle (vgl. [6]) und werden mit einer zusätzlichen Induktivität an das bestehende System gekoppelt. Die hier vorgestellte Erfindung dient dagegen als frei einstellbare Spannungsquelle, deren Ausgangsimpedanz variabel einstellbar ist. Die Anwendung ist daher nicht auf die Reduktion von Stromoberschwingungen beschränkt, sondern stellt eine oberschwingungsarme Spannungsquelle dar. Sie eignet sich daher als elektrische Last, Prüfspannungsquelle oder Emulationsumrichter.

Aktive Filter benötigen, wie in [6, S. 2326] dargelegt, ein spannungsbildendes-System und für die Regelung ein von diesem System abhängiges Referenzsignal. Demgegenüber stellt die hier vorgestellte Erfindung ein spannungsbildendes System dar. Dieses System ist unter anderem in der Lage, ein beliebiges dreiphasiges Inselnetz zu erzeugen.

Zusammenfassend findet sich somit bisher im Stand der Technik kein Konzept, welches die zuvor beschriebenen Nachteile lösen könnte.

### Aufgabe

Der Erfindung liegt die objektive technische Aufgabe zugrunde ein Schaltungskonzept für einen dreiphasigen Umrichter derart bereitzustellen, dass die energie- und spannungsgebenden Einheiten voneinander getrennt angeordnet sind und diese beiden Einheiten über eine separate Kopplungsinduktivität zu einem dreiphasigen Hybridumrichter elektrisch leitfähig miteinander kombiniert sind.

### Lösung

Diese zuvor genannte objektiv technische Aufgabe wird mit der hierin offenbarten Vorrichtung gemäß den Merkmalen des unabhängigen Anspruchs 1 gelöst. Hierauf bezogene Unteransprüche geben vorteilhafte Ausgestaltungen bzw. Ausführungsformen wieder. Vorteilhafte Weiterbildungen, welche einzeln oder in beliebiger Kombination realisierbar sind, sind in den abhängigen Ansprüchen dargestellt.

Die hierin offenbarte Vorrichtung beschreibt ein Konzept, in einem dreiphasigen Umrichter energie- und spannungsstellende Einheit durch eine Kopplungsinduktivität zu entkoppeln und zu einem dreiphasigen Hybridumrichter zu kombinieren.

Im Folgenden werden die Begriffe "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise (bspw.)" öder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform" oder durch "in einer weiteren Ausführungsform" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, hierdurch eingeleitete Merkmale mit anderen Merkmalen zu kombinieren, seien es optionale oder nicht-optionale Merkmale, unangetastet bleiben.

### Allgemeine Beschreibung und Ausführungsformen

In einer Ausführungsform umfasst eine erfindungsgemäße Vorrichtung eine Schaltungsanordnung mit mindestens einem dreiphasigen Anschluss und optional mindestens einem Anschluss zur DC-Versorgung, wobei die Schaltungsanordnung umfasst: eine erste dreiphasige Stromrichterschaltung, umfassend einen dreiphasigen Anschluss, optional einen Anschluss zur DC-Versorgung und mindestens eine Kommunikationsschnittstelle; eine zweite dreiphasige Stromrichterschaltung, umfassend einen dreiphasigen Anschluss und mindestens eine Kommunikationsschnittstelle; eine Kopplungseinheit, umfassend einen ersten dreiphasigen Anschluss und einen zweiten dreiphasigen Anschluss; und entweder eine Steuer- oder Regeleinheit mit mindestens einer Kommunikationsschnittstelle; oder eine erste Steuer- oder Regeleinheit mit mindestens einer Kommunikationsschnittstelle und eine zweite Steuer- oder Regeleinheit mit mindestens einer Kommunikationsschnittstelle; dadurch gekennzeichnet, dass die erste dreiphasige Stromrichterschaltung und die zweite dreiphasige Stromrichterschaltung elektrisch leitfähig über die Kopplungseinheit derart miteinander gekoppelt sind, dass der dreiphasige Anschluss der ersten dreiphasigen Stromrichterschaltung elektrisch leitfähig mit dem ersten dreiphasigen Anschluss der Kopplungseinheit gekoppelt ist und der zweite dreiphasige Anschluss der Kopplungseinheit mit dem dreiphasigen Anschluss der zweiten dreiphasigen Stromrichterschaltung elektrisch leitfähig gekoppelt ist; und wobei der zweite dreiphasige Anschluss der Kopplungseinheit und der dreiphasige Anschluss der zweiten dreiphasigen Stromrichterschaltung elektrisch leitfähig mit dem dreiphasigen Anschluss der Schaltungsanordnung gekoppelt sind; und wobei der optionale Anschluss zur DC-Versorgung der ersten Stromrichterschaltung elektrisch leitfähig mit dem optionalen Anschluss zur DC-Versorgung der Schaltungsanordnung gekoppelt ist; und wobei entweder die Kommunikationsschnittstelle der ersten dreiphasigen Stromrichterschaltung und die Kommunikationsschnittstelle der zweiten dreiphasigen Stromrichterschaltung gemeinsam mit der Kommunikationsschnittstelle der Steuer- oder Regeleinheit gekoppelt sind; oder die Kommunikationsschnittstelle der ersten dreiphasigen Stromrichterschaltung ist mit der Kommunikationsschnittstelle der ersten Regel- oder Steuereinheit gekoppelt und die Kommunikationsschnittstelle der zweiten dreiphasigen Stromrichterschaltung ist mit der Kommunikationsschnittstelle der zweiten Regel- oder Steuereinheiten gekoppelt.

Hierin ist unter dem Begriff Vorrichtung jede Vorrichtung zu verstehen, die zumindest alle Merkmale des Anspruchs 1 umfasst.

Hierin ist unter dem Begriff Schaltungsanordnung jede Vorrichtung zu verstehen, die zumindest einen dreiphasigen Anschluss, eine erste und eine zweite dreiphasige Stromrichterschaltung, eine Kopplungseinheit sowie mindestens eine Steuer- oder Regeleinheit mit mindestens einer Kommunikationseinheit umfasst.

Hierin ist unter dem Begriff dreiphasiger Anschluss ein Anschluss zu verstehen, der drei elektrisch leitfähige Anschlüsse umfasst.

Hierin ist unter dem Begriff Anschluss zur DC-Versorgung ein Anschluss zu verstehen, der mindestens zwei elektrisch leitfähige Anschlüsse umfasst.

Hierin ist unter einer dreiphasigen Stromrichterschaltung eine elektrische Schaltung zu verstehen, die über mindestens einen dreiphasigen Anschluss und mindestens eine Kommunikätionsschnittstelle verfügt, wobei ferner die Stromrichterschaltung zumindest eine Stromrichterschaltung aus der Gruppe von Stromrichterschaltungen umfasst, wobei diese Gruppe von Stromrichterschaltungen aufweist: 2-LVSC, MMC, CHB, FLC, n-L (A-,T-)NPC, Linearverstärker, CHBS in Dreiecksschaltung und/oder CHBS in Sternschaltung.

Hierin wird unter dem Begriff Kommunikationsschnittstelle ein Anschluss zum Empfangen und oder Senden von digitalen und oder analogen Signalen verstanden. Die digitalen und oder analogen Signale können dabei elektrisch, optisch und oder über elektromagnetische Wellen übertragen und oder empfangen werden.

Hierin wird unter dem Begriff Kopplungseinheit ein elektrisches Bauteil mit mindestens drei einzelnen und oder magnetisch gekoppelten Drosseln und einem ersten dreiphasigen Anschluss und einem zweiten dreiphasigen Anschluss verstanden, wobei jede der drei Drosseln mit einem der drei Anschlüsse des ersten dreiphasigen Anschlusses und mit einem der drei Anschlüsse des zweiten dreiphasigen Anschlusses elektrisch leitfähig verbunden ist.

Hierin wird unter dem Begriff Steuer- oder Regeleinheit eine Einheit zur Verarbeitung und Erzeugung von digitalen und oder analogen Signalen verstanden, wobei diese Einheit die Steuerung und oder Regelung der gesamten Vorrichtung oder auch nur der ersten dreiphasigen Stromrichterschaltung und oder der zweiten dreiphasigen Stromrichterschaltung übernimmt.

Die Beschreibung des Funktionsprinzips einer erfindungsgemäßen Vorrichtung bzw. eines erfindungsgemäßen dreiphasigen Hybridumrichters wird hierin exemplarisch anhand einer beispielhaften Schaltung erläutert. Am Anschlusspunkt des Spannungsquellenumrichters, in diesem Beispiel ein sternverschalteter CHBS, teilt sich der Strom I_{2-L-VSC} des Energiequellenumrichters, in diesem Beispiel ein Zweipunktumrichter (2-L-VSC), in den Strom I_{VS} des Spannungsquellenumrichters und den Laststrom I_{L} auf. Durch die Parallelschaltung des Spannungsquellenumrichters im Hybridumrichter an den Ausgang des Hybridumrichters wird der Laststrom I_{L} direkt durch die Ausgansspannung U_{VS} des Spannungsquellenumrichters bestimmt. Die gegenüber des Energiequellenumrichters höhere Ausgangsspannungsqualität des Spannungsquellenumrichters führt gegenüber dem Strom I_{2-L-VSC} zu einer geringeren Stromverzerrung im Laststrom I_{L}. Aus dem Schaltungsprinzip folgt, dass diese Stromdifferenz (I_{VS}=I_{2-L-VSC}-I_{L}) durch den Spannungsquellenumrichter zu decken ist. Dies bedeutet, dass der Spannungsquellenumrichter den taktfrequenten Verzerrungsstrom des Energiequellenumrichters aufnimmt. Um dies zu erreichen ist eine gemeinsame Regelung von Energie- und Spannungsquellenumrichter erforderlich. Ein mögliches Regelungsprinzip besteht in der direkten Regelung des Spannungsquellenstroms I_{VS} durch den Energiequellenumrichter 2-L-VSC in Form einer Hystereseregelung. Dabei wird für den Spannungsquellenumrichter ein maximaler Strom I_{VS,max} definiert. Erreicht der Strom I_{VS} diesen Wert, so schaltet der Energiequellenumrichter in einen Schaltzustand, der den Strom I_{2-L-VSC} derart verändert, sodass eine Abnahme von I_{VS} erreicht wird. Somit kann sichergestellt werden, dass der Strom I_{VS} ein vorgegebenes Stromband nicht verlässt. Dementsprechend erfolgt die Regelung des Laststroms I_{L} durch den Spannungsquellenumrichter und die Regelung des Spannungsquellenumrichterstroms I_{VS} durch den Energiequellenumrichter. Eine weitere Möglichkeit zur Regelung des Hybridumrichters stellt eine kaskadierte Vektorregelung mit Energieregelung dar. Dabei regelt der Energiequellenumrichter den Grundschwingungsstrom des Spannungsquellenumrichters in Abhängigkeit dessen Energiezustands, sodass alle Zellspannungen des Spannungsquellenumrichters auf ihrem Sollwert gehalten werden. Dies ermöglicht eine minimale Verzerrung des Ausgangsstroms und führt zu einer optimalen Lastregelung durch den Spannungsquel-lenumrichter.

Der Spannungsquellenumrichter stellt ausschließlich die durch die Stromverzerrungen entstehende Blindleistung bereit und ist nicht am Wirkleistungsumsatz am dreiphasigen Anschluss des Hybridumrich-ters beteiligt. Folglich kann der Spannungsquellenumrichter für eine gegenüber der Gesamtleistung des Hybridumrichters erheblich geringere Leistung ausgelegt werden. Gegenüber einem konventionellen Umrichter kann der hohe passive LC- bzw. LCL-Filteraufwand, der zur Erreichung der gleichen Ausgangsspannungsqualität erforderlich ist, erheblich reduziert werden.

Aus der zuvor beschriebenen Funktionsweise einer erfindungsgemäßen Vorrichtung ergeben sich folgende Vorteile bzw. Anwendungsfelder gegenüber dem Stand der Technik von Umrichtern mit Gleichspannungszwischenkreis, wie bspw.:
- **Eine Verringerung von Kosten und Volumen des Ausgangsfilters:** Die im Vergleich zur Gesamtleistung des Hybridumrichters niedrige Belastung des Spannungsquellenumrichters, der ausschließlich den Verzerrungsstrom des Energiequellenumrichters führen muss, ermöglicht eine kompakte und kostengünstige Auslegung des Spannungsquellenumrichters. Eine Verringerung der Kopplungsinduktivität, bei gleichbleibender Zwischenkreisspannung und Taktfrequenz des Energiequellenumrichters, führt zwar zu einer stärkeren Belastung des Spannungsquellenumrichters; verursacht aber keine stärkere Verzerrung des Ausgangsstroms. Ferner können durch einen kaskadierten Aufbau des Spannungsquellenumrichters Kondensatoren mit kleinerer Nennspannung und kleinerem Nennstrom verwendet werden, was zu einer Reduktion des Volumens führt. Im Gegensatz dazu führt bei einem konventionellen Umrichter mit passivem Ausgangsfilter die Verringerung der Filterinduktivität zu einer höheren Verzerrung des Ausgangsstroms, während die Nennspannung der Filterkapazitäten über der Ausgangsspannung liegen muss.
- **Frequenzunabhängige Filter:** Passive Ausgangsfilter von aktuellen Umrichtern sind unter Berücksichtigung von Resonanzfrequenzen und den zu dämpfenden Oberschwingungen frequenzabhängig ausgelegt. Dies führt zu einer Beeinträchtigung der Filterwirkung bei einer Änderung der Ausgangsfrequenz des Umrichters. Durch die aktive Stellung der Ausgangsspannung durch den Spannungsquellenumrichter ergibt sich ein frequenzunabhängiges Filterverhalten am Ausgang des Hybridumrichters.
- **Variable Ausgangsimpedanz:** Durch die Entkopplung von Energie- und Spannungsquelle kann die Ausgangsimpedanz variabel eingestellt werden. Dies prädestiniert den Hybridumrichter für den Einsatz als elektrische Last oder als Emulator (Netz, Drehstrommaschinen, ... etc.).
- **Vorteile gegenüber Modularen Multilevel Convertern (MMC):** Der Modulare Multilevel Converter ist bis heute Gegenstand zahlreicher akademischer Forschungsaktivitäten auf dem Gebiet der Leistungselektronik. Verglichen mit dem vorgestellten hybriden Umrichterkonzept mit einem auf der MMC-Topologie basierenden Spannungsquellenumrichter wird ein Modularer Multilevel Converter der gleichen Leistungs- und Spannungsebene höhere Kosten und ein größeres Volumen aufweisen. Darüber hinaus bietet ein hybrider Multilevelumrichter hinsichtlich der Betriebseigenschaften ebenfalls wesentliche Vorteile gegenüber dem Modularen Multilevel Converter. Da der Spannungsquellenumrichter unabhängig von seiner Ausgangsspannungsfrequenz ausschließlich mit dem Verzerrungsstrom des Energiequellenumrichters belastet wird, führt dies zu einem zuverlässigen und uneingeschränkten Betrieb bis zu einer Ausgangsfrequenz von 0 Hz (DC). Demgegenüber stellen niedrige Ausgangsfrequenzen aufgrund des Spannungshubes in den Submodulen beim Modularen Multilevel Converter eine erhebliche Problemstellung dar.
- **Stufenlose Ausgangsspannung:** Eine modulare Auslegung des Spannungsquellenumrichters für eine Leistung, die deutlich unterhalb der Gesamtleistung des Hybridumrichters liegt, ermöglicht den von der Leistungs- und Spannungsebene unabhängigen Einsatz von linearen Leistungsverstärkern.. Bisher wurden lineare Leistungsverstärker in leistungselektronischen Schaltungen geringer Spannung und Leistung eingesetzt, um eine stufenlose Ausgangsspannung zu erzeugen. Aufgrund der hohen Verlustleistungen ist der kompakte Entwurf von linearen Leistungsverstärkern mit hohen Leistungsdichten bis heute nicht möglich.
- **Anwendungen:** Aus oben genannten Vorteilen ergeben sich zahlreiche vielversprechende Anwendungen für den vorgestellten Hybridumrichter. Die wichtigsten Anwendungen stellen Netzanwendungen, der Einsatz als leistungsstarke Laborspannungsquelle oder als Emulationsumrichter sowie der Einsatz als Antriebsumrichter für Drehstrommaschinen dar.
- **Netzseitige Umrichter:** Aufgrund des gegenüber aktuellen Umrichtern mit passiven Ausgangsfiltern kostengünstigeren und kompakteren Aufbaus des Hybridumrichters ist der Einsatz als Solar- oder Batteriewechselrichter zur Einspeisung ins Energienetz vielversprechend. Ferner ist auch der Einsatz als Netzkupplung, STATCOM oder Solid-State-Transformator im Mittelspannungsnetz möglich. Heutige in der Mittelspannung eingesetzte Umrichter erfordern einen sehr hohen Filteraufwand, der durch die Verwendung des Hybridumrichters reduziert werden kann.

### Kurzbeschreibung der Figuren

Weitere Einzelheiten und Merkmale der vorliegenden Erfindung ergeben sich aus der nachfolgenden Beschreibung eines bevorzugten Ausführungsbeispiels, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt'.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Zur Veranschaulichung und ohne einschränkende Wirkung ergeben sich weitere Merkmale und Vorteile der Erfindung aus der Beschreibung der beigefügten Zeichnungen. Darin zeigen:
- **Fig. 1**: Zwei schematische Darstellungen einer Ausführungsform einer erfindungsgemäßen Vorrichtung;
- **Fig. 2**: eine schematische Darstellung einer Ausführungsform einer erfindungsgemäßen Kopplungseinheit;
- **Fig. 3**: eine schematische Darstellung einer Ausführungsform eines Halbleiterventils;
- **Fig. 4**: eine schematische Darstellung einer Ausführungsform eines einphasigen 2-L-Voltage Source DC-AC Converters;
- **Fig. 5**: eine schematische Darstellung einer Ausführungsform einer erfindungsgemäßen ersten dreiphasigen Stromrichterschaltung; wobei diese 2-L-Voltage Source DC-AC Converter genannt wird;
- **Fig. 6**: eine schematische Darstellung einer Ausführungsform eines einphasigen 3-L-Neutral Point Clamped Converters;
- **Fig. 7**: eine schematische Darstellung einer weiteren Ausführungsform einer erfindungsgemäßen ersten dreiphasigen Stromrichterschaltung; wobei diese 3-L-Neutral Point Clamped Converter genannt wird;
- **Fig. 8**: eine schematische Darstellung einer Ausführungsform eines einphasigen 3-L-T-type-Neutral Point Clamped Converters;
- **Fig. 9**: eine schematische Darstellung einer weiteren Ausführungsform einer erfindungsgemäßen ersten dreiphasigen Stromrichterschaltung; wobei diese 3-L-T-type-Neutral Point Clamped Converter genannt wird
- **Fig. 10**: eine schematische Darstellung einer Ausführungsform einer Zelle eines Multilevelumrichters mit verteiltem Zwischenkreis in Vollbrückenkonfiguration;
- **Fig. 11**: eine schematische Darstellung einer Ausführungsform eines Zweiges eines Multilevelumrichters mit verteiltem Zwischenkreis mit drei Zellen in Vollbrückenkonfiguration (Bezeichnung 240). Die Zellenanzahl kann auch 2,4,5, n betragen;
- **Fig. 12**: eine schematische Darstellung einer Ausführungsform einer Phase eines Modularen Multilevel Converters mit Zellen in Vollbrückenkonfiguration (Bezeichnung 260);
- **Fig. 13**: eine schematische Darstellung einer Ausführungsform einer erfindungsgemäßen zweiten dreiphasigen Stromrichterschaltung; wobei diese Modularer Multilevel Converter in Vollbrückenkonfiguration genannt wird;
- **Fig. 14**: eine schematische Darstellung einer Ausführungsform einer Zelle eines Multilevelumrichters mit verteiltem Zwischenkreis in Halbbrückenkonfiguration;
- **Fig. 15**: eine schematische Darstellung einer Ausführungsform eines Zweiges eines Multilevelumrichters mit verteiltem Zwischenkreis mit drei Zellen in Halbbrückenkonfiguration (Bezeichnung 241). Die Zellenanzahl kann auch 2,4,5, n betragen;
- **Fig. 16**: eine schematische Darstellung einer Ausführungsform einer Phase eines Modularen Multilevel Converters mit Zellen in Halbbrückenkonfiguration (Bezeichnung 261);
- **Fig. 17**: eine schematische Darstellung einer Ausführungsform einer weiteren erfindungsgemäßen zweiten dreiphasigen Stromrichterschaltung; wobei diese Modularer Multilevel Converter in Halbbrückenkonfiguration genannt wird;
- **Fig. 18**: eine schematische Darstellung einer Ausführungsform einer Phase einer Linearverstärkerschaltung;
- **Fig. 19**: eine schematische Darstellung einer Ausführungsform einer weiteren erfindungsgemäßen zweiten dreiphasigen Stromrichterschaltung; wobei diese Linearverstärkerschaltung genannt wird;
- **Fig. 20**: eine schematische Darstellung einer Ausführungsform einer weiteren erfindungsgemäßen zweiten dreiphasigen Stromrichterschaltung; wobei diese Cascaded H-Bridge STATCOM Converter in Sternschaltung genannt wird;
- **Fig. 21**: eine schematische Darstellung einer Ausführungsform einer Phase eines 5-L-Flying Capacitor Converters;
- **Fig. 22**: eine schematische Darstellung einer Ausführungsform einer weiteren' erfindungsgemäßen zweiten dreiphasigen Stromrichterschaltung; wobei diese 5-L-Flying Capacitor Converter genannt wird;
- **Fig. 23**: eine schematische Darstellung einer Ausführungsform einer weiteren erfindungsgemäßen zweiten dreiphasigen Stromrichterschaltung; wobei diese Cascaded H-Bridge STATCOM Converter in Dreiecksschaltung genannt wird.

### Detaillierte Beschreibung

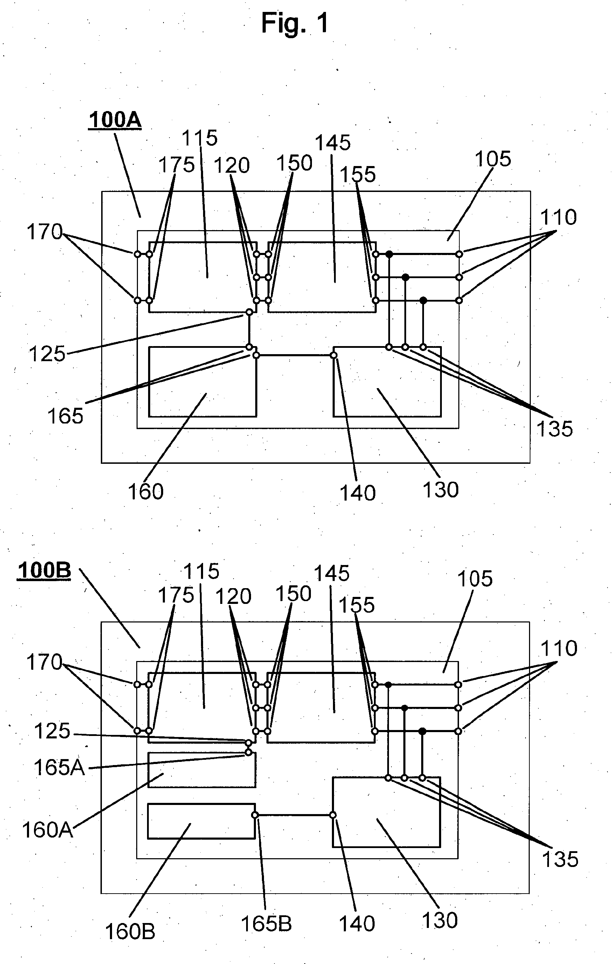

**Fig. 1** jeweils eine Ausführungsform einer erfindungsgemäßen Vorrichtung **100A** bzw. **100B** gemäß dem Gegenstand des unabhängigen Anspruchs 1, wobei die beiden Vorrichtungen sich dadurch unterscheiden, dass Vorrichtung **100A** eine gemeinsame Steuer- oder Regeleinheit **160** aufweist und die Vorrichtung **100B** zwei getrennte bzw. zwei separate Steuer- oder Regeleinheiten, **160A** und **160B.**

Wie in Figur 1 dargestellt umfassen die Vorrichtungen **100A** bzw. **100B** eine Schaltungsanordnung **105** mit mindestens einem dreiphasigen Anschluss **110** und optional mindestens einem Anschluss zur DC-Versorgung **170,** wobei die Schaltungsanordnung **105** umfasst: eine erste dreiphasige Stromrichterschaltung **115**, umfassend einen dreiphasigen Anschluss **120**, optional einen Anschluss zur DC-Versorgung **175** und eine Kommunikationsschnittstelle **125**; eine zweite dreiphasige Stromrichterschaltung **130**, umfassend einen dreiphasigen Anschluss **135** und eine Kommunikationsschnittstelle **140;** eine Kopplungseinheit **145**, umfassend einen ersten dreiphasigen Anschluss **150** und einem zweiten dreiphasigen Anschluss **155**; und entweder eine Steuer- oder Regeleinheit **160** mit mindestens einer Kommunikationsschnittstelle **165;** oder eine erste Steuer- oder Regeleinheit **160A** mit mindestens einer Kommunikationsschnittstelle **165A** und eine zweite Steuer- oder Regeleinheit **160B** mit mindestens einer Kommunikationsschnittstelle **165B;** dadurch gekennzeichnet, dass die erste dreiphasige Stromrichterschaltung **115** und die zweite dreiphasige Stromrichterschaltung **130** elektrisch leitfähig über die Kopplungseinheit **145** derart miteinander gekoppelt sind, dass der dreiphasige Anschluss **120** der ersten dreiphasigen Stromrichterschaltung **115** elektrisch leitfähig mit dem ersten dreiphasigen Anschluss **150** der Kopplungseinheit **145** gekoppelt ist und der zweite dreiphasige Anschluss **155** der Kopplungseinheit **145** mit dem dreiphasigen Anschluss **135** der zweiten dreiphasigen Stromrichterschaltung **130** elektrisch leitfähig gekoppelt ist; und wobei der zweite dreiphasige Anschluss **155** der Kopplungseinheit **145** und der dreiphasige Anschluss **135** der zweiten dreiphasigen Stromrichterschaltung **130** elektrisch leitfähig mit dem dreiphasigen Anschluss **110** der Schaltungsanordnung **105** gekoppelt sind; und wobei der optionale Anschluss zur DC-Versorgung **175** der ersten dreiphasigen Stromrichterschaltung **115** elektrisch leitfähig mit dem optionalen Anschluss zur DC-Versorgung **170** der Schaltungsanordnung **105** gekoppelt ist; wobei die Schaltungsanordnung **105** hier schematisch mit einem optionalen, elektrisch leitfähigen Anschluss zur DC-Versorgung **170** dargestellt ist, jedoch auch ohne diesen ausgeführt sein kann, in diesem Fall entfällt der optionale, elektrisch leitfähige Anschluss zur DC-Versorgung **170** der Schaltungsanordnung **105** sowie der optionale elektrisch leitfähige Anschluss zur DC-Versorgung **175** der ersten dreiphasigen Stromrichterschaltung **115**; und wobei entweder die Kommunikationsschnittstelle **125** der ersten dreiphasigen Stromrichterschaltung **115** und die Kommunikationsschnittstelle **140** der zweiten dreiphasigen Stromrichterschaltung **130** gemeinsam mit der Kommunikationsschnittstelle **165** der Steuer- oder Regeleinheit **160** gekoppelt sind; oder die Kommunikationsschnittstelle **125** der ersten dreiphasigen Stromrichterschaltung **115** mit der Kommunikationsschnittstelle **165A** der ersten Regel- oder Steuereinheit **160A** gekoppelt ist und die Kommunikationsschnittstelle **140** der zweiten dreiphasigen Stromrichterschaltung **130** mit der Kommunikationsschnittstelle **165B** der zweiten Regel- oder Steuereinheiten **160B** gekoppelt ist.

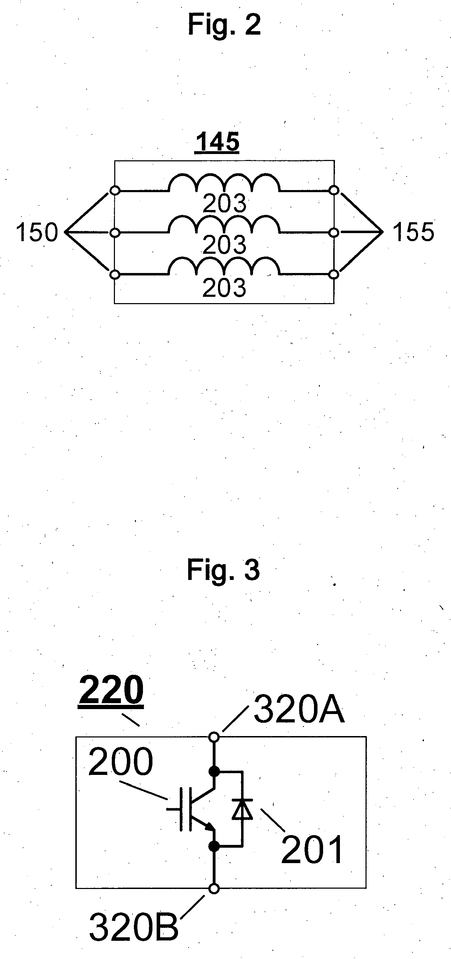

**Fig. 2** zeigt eine weitere Ausführungsform der Kopplungseinheit **145**, umfassend drei Drosseln **203,** einen ersten dreiphasigen Anschluss **1**50 und einen zweiten dreiphasigen Anschluss 1**5**5; wobei jede der drei Drosseln **203** jeweils mit einer Phase des ersten dreiphasigen Anschlusses **150** und mit einer Phase des zweiten dreiphasigen Anschlusses **155** elektrisch leitfähig verbunden ist.

**Fig. 3** zeigt eine weitere Ausführungsform eines Halbleiterventils **220,** umfassend einen ersten elektrisch leitfähigen Anschluss **320A,** einen zweiten elektrisch leitfähigen Anschluss **320B,** wobei das Halbleiterventil **220** umfasst: Einen abschaltbaren Halbleiterschalter **200,** eine Halbleiterdiode **201,** einen ersten elektrisch leitfähigen Anschluss **320A** und einen zweiten elektrisch leitfähigen Anschluss **320B;** wobei der Kollektor des Halbleiterschalters **200** elektrisch leitfähig mit der Kathode der Halbleiterdiode **201** und elektrisch leitfähig mit dem ersten Anschluss **320A** verbunden ist; wobei der Emitter des Halbleiterschälters **200** elektrisch leitfähig mit der Anode der Halbleiterdiode **201** und elektrisch leitfähig mit dem zweiten Anschluss **320B** verbunden ist; wobei der abschaltbare Halbleiterschalter **200** hier als Insulated-Gate-Bipolar-Transistoren (IGBT) dargestellt ist, jedoch auch ein MOS-Feldeffekttransistoren (MOSFET), ein Bipolartransistor, ein Gate-Turn-Off-Thyristoren (GTO) oder ein Integrated-Gate-Commutated-Thyristoren (IGCT) verwendet werden kann.

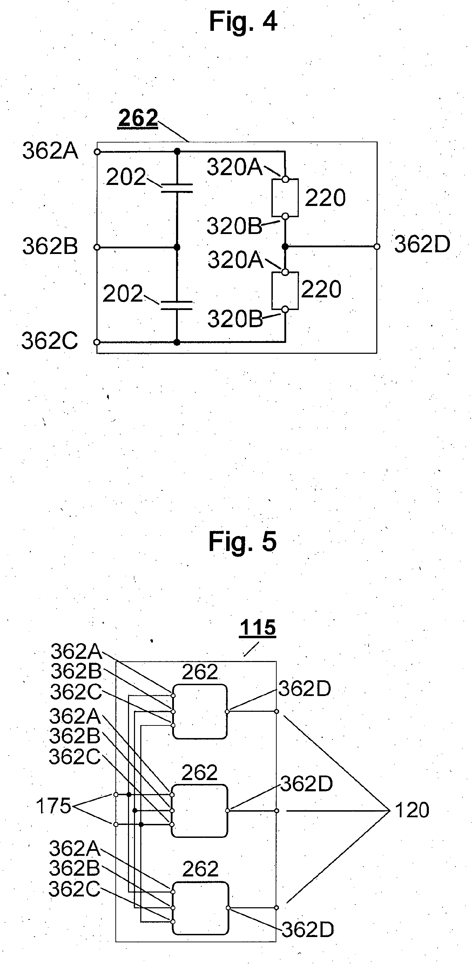

**Fig. 4** zeigt eine weitere Ausführungsform eines einphasigen 2-L-. Voltage Source Converters (2-L-VSC) **262** mit optionalen Mittelpunkt, umfassend zwei elektrisch leitfähige Anschlüsse **362A** und **362C** zur DC-Versorgung, einen optionalen elektrisch leitfähigen Anschluss **362B** und einen elektrisch leitfähigen Anschluss **362D;** wobei der 2-L-VSC **262** umfasst: Ein erstes Halbleiterventil **220,** ein zweites Halbleiterventil **220,** einen ersten Kondensator **202,** einen zweiten optionalen Kondensator **202,** einen ersten elektrisch leitfähigen Anschluss zur DC-Versorgung **362A,** einen zweiten optionalen elektrisch leitfähigen Anschluss zur DC-Versorgung **362B,** einen dritten elektrisch leitfähigen Anschluss zur DC-Versorgung **362C** und einen elektrisch leitfähigen Anschluss **362D;** wobei der Anschluss **320A** des ersten Halbleiterventils **220** elektrisch leitfähig mit dem ersten Anschluss des ersten Kondensators **202** und elektrisch leitfähig mit dem ersten Anschluss zur DC-Versorgung **362A** verbunden ist; wobei der Anschluss **320B** des zweiten Halbleiterventils **220** elektrisch leitfähig mit dem zweiten Anschluss des zweiten Kondensators **202** und elektrisch leitfähig mit dem dritten Anschluss zur DC-Versorgung **362C** verbunden ist; wobei der zweite Anschluss des ersten Kondensators **202** elektrisch leitfähig mit dem ersten Anschluss des zweiten optionalen Kondensators **202** und elektrisch leitfähig mit dem zweiten optionalen Anschluss zur DC-Versorgung **362B** verbunden ist; wobei der Anschluss **320B** des ersten Halbleiterventils **220** elektrisch leitfähig mit dem ersten Anschluss **320A** des zweiten Halbleiterventils **220** und elektrisch leitfähig mit dem Anschluss **362D** verbunden ist, wobei die Schaltung **262** hier mit optionalen Mittelpunkt dargestellt ist, jedoch auch ohne diesen ausgeführt werden kann, in diesem Fall entfällt der zweite optionale elektrisch leitfähige Anschluss zur DC-Versorgung **362B** und der zweite optionale Kondensator **202;** wobei der Anschluss **320B** des zweiten Halbleiterventils **220** elektrisch leitfähig mit dem zweiten Anschluss des ersten Kondensators **202** und elektrisch leitfähig mit dem dritten Anschluss zur DC-Versorgung **362C** verbunden ist und die Schaltung wird einphasiger 2-L-Voltage Source Converters (2-L-VSC) ohne Mittepunkt genannt.

**Fig. 5** zeigt eine weitere Ausführungsform der ersten dreiphasigen Stromrichterschaltung **115,** umfassend einen dreiphasigen Anschluss **120** und einen optionalen Anschluss zur DC-Versorgung **175,** wobei die Stromrichterschaltung **115** umfasst: Drei-einphasige 2-L-Voltage Source Converter **262,** die an ihren DC-Anschlüssen **362A, 362C** und dem optionalen DC-Anschluss **362B** elektrisch leitfähig miteinander verbunden sind, wobei der optionale DC-Anschluss zur Versorgung **175** elektrisch leitfähig mit den DC-Anschlüssen **362A** und **362C** verbunden ist und deren Anschlüsse **362D** elektrisch leitfähig mit dem dreiphasigen Anschluss **120** der Stromrichterschaltung verbunden sind, wobei die Schaltungen **262** hier mit optionalen Mittelpunkt dargestellt sind, jedoch auch ohne diesen ausgeführt sein können, in diesem Fall entfällt der zweite optionale elektrisch leitfähige Anschluss zur DC-Versorgung **362B** der Schaltungen **262,** wobei die erste dreiphasige Stromrichterschaltung **115** hier mit einem optionalen, elektrisch leitfähigen Anschluss 'zur DC-Versorgung **175** schematisch dargestellt ist, jedoch auch ohne diesen ausgeführt sein kann, in diesem Fall entfällt der optionale, elektrisch leitfähige Anschluss zur DC-Versorgung **175** der ersten dreiphasigen Stromrichterschaltung **115.**

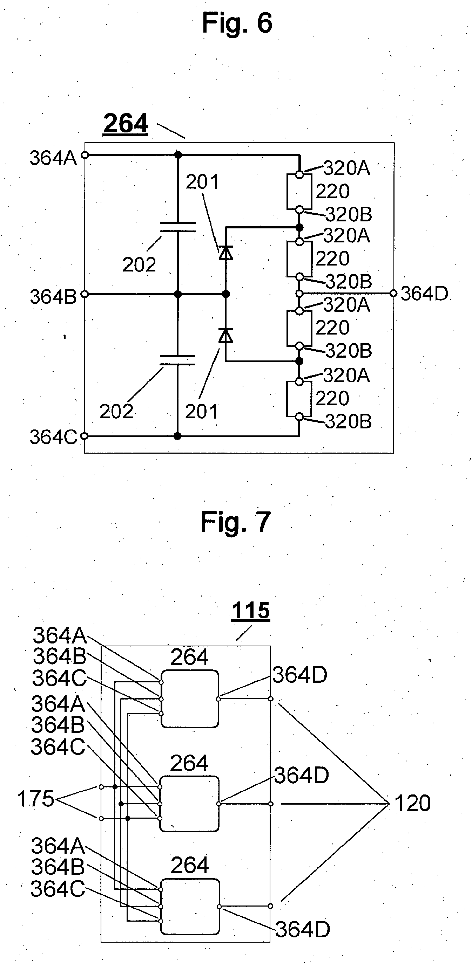

**Fig. 6** zeigt eine weitere Ausführungsform eines einphasigen 3-L-Neutral Point Clamped Converter (3-L-NPC) **264,** umfassend drei elektrisch leitfähige Anschlüsse **364A, 364B** und **364C** zur DC-Versorgung und einen elektrisch leitfähigen Anschluss **364D;** wobei der 3-L-NPC **264** umfasst: Ein erstes Halbleiterventil **220,** ein zweites Halbleiterventil **220,** ein drittes Halbleiterventil **220,** ein viertes Halbleiterventil **220,** eine erste Halbleiterdiode **201,** eine zweite Halbleiterdiode **201,** einen ersten Kondensator **202,** einen zweiten Kondensator **202,** einen ersten elektrisch leitfähigen Anschluss zur DC-Versorgung **364A,** einen zweiten elektrisch leitfähigen Anschluss zur DC-Versorgung **364B,**einen dritten elektrisch leitfähigen Anschluss zur DC-Versorgung **364C** und einen elektrisch leitfähigen Anschluss **364D;** wobei der Anschluss **320A** des ersten Halbleiterventils **220** elektrisch leitfähig mit dem ersten Anschluss des ersten Kondensators. **202** und elektrisch leitfähig mit dem ersten Anschluss zur DC-Versorgung **364A** verbunden ist; wobei der Anschluss **320B** des vierten Halbleiterventils **220** elektrisch leitfähig mit dem zweiten Anschluss des zweiten Kondensators **202** und elektrisch leitfähig mit dem'dritten Anschluss zur DC-Versorgung **364C** verbunden ist; wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **364B** und elektrisch leitfähig mit der Anode der ersten Halbleiterdiode **201** und elektrisch leitfähig mit der Kathode der zweiten Halbleiterdiode **201** verbunden ist; wobei der Anschluss **320B** des ersten Halbleiterventils **220** elektrisch leitfähig mit dem ersten Anschluss **320A** des zweiten Halbleiterventils **220** und elektrisch leitfähig mit der Kathode der ersten Halbleiterdiode **201** verbunden ist; wobei der Anschluss **320B** des zweiten Halbleiterventils **220** elektrisch leitfähig mit dem ersten Anschluss **320A** des dritten Halbleiterventils **220** und elektrisch leitfähig mit dem Anschluss **364D** verbunden ist; wobei der Anschluss **320B** des dritten Halbleiterventils **220** elektrisch leitfähig mit dem ersten Anschluss **320A** des vierten Halbleiterventils **220** und elektrisch leitfähig mit der Anode der zweiten Halbleiterdiode **201** verbunden ist.

**Fig. 7** zeigt eine weitere Ausführungsform der ersten dreiphasigen Stromrichterschaltung **115,** umfassend einen dreiphasigen Anschluss **120** und optional einen Anschluss zur DC-Versorgung **175,** wobei die Stromrichterschaltung **115** umfasst: Drei einphasige 3-L-NPCs **264,** die an ihren DC-Anschlüssen **264A, 264B, 264C** elektrisch leitfähig miteinander verbunden sind, wobei der optionale DC-Anschluss zur Versorgung **175** elektrisch leitfähig mit den DC-Anschlüssen **364A** und **364C** verbunden ist und deren Anschlüsse **264D** elektrisch leitfähig mit dem dreiphasigen Anschluss **120** der Stromrichterschaltung verbunden sind, wobei die erste dreiphasige Stromrichterschaltung **115** hier mit einem optionalen, elektrisch leitfähigen Anschluss zur DC-Versorgung **175** dargestellt ist, jedoch auch ohne diesen ausgeführt sein kann, in diesem Fall entfällt der optionale elektrisch leitfähige Anschluss zur DC-Versorgung **175** der ersten dreiphasigen Stromrichterschaltung **115.**

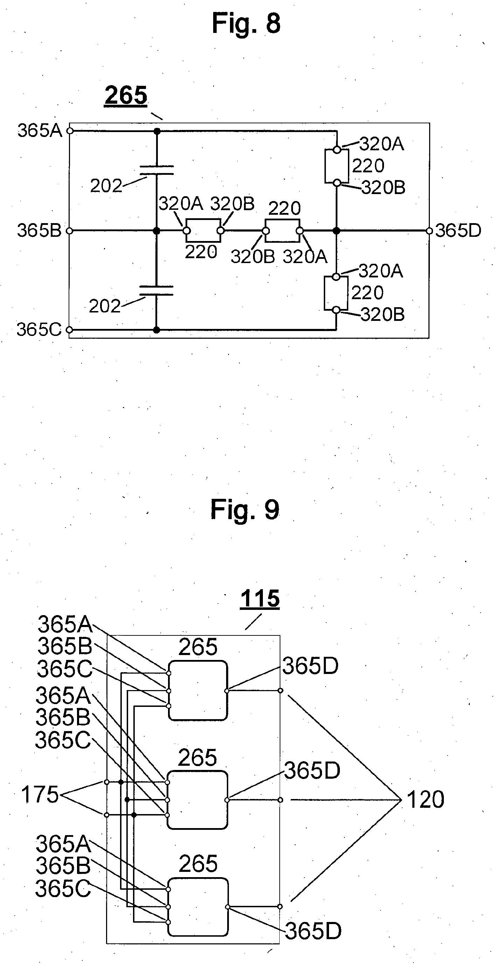

**Fig. 8** zeigt eine weitere Ausführungsform eines einphasigen 3-L-T-type-Neutral Point Clamped Converters (3-L-TNPC) **265,** umfassend drei elektrisch leitfähige Anschlüsse **365A, 365B** und **365C** zur DC-Versorgung und einen elektrisch leitfähigen Anschluss **365D;** wobei der 3-L-TNPC **265** umfasst: Ein erstes Halbleiterventil **220,** ein zweites Halbleiterventil **220,** ein drittes Halbleiterventil **220,** ein viertes Halbleiterventil **220,** einen ersten Kondensator **202,** einen zweiten Kondensator **202,** einen ersten elektrisch leitfähigen Anschluss zur DC-Versorgung **365A,** einen zweiten elektrisch leitfähigen Anschluss zur DC-Versorgung **365B,** einen dritten elektrisch leitfähigen Anschluss zur DC-Versorgung **365C** und einen elektrisch leitfähigen Anschluss **365D;** wobei der Anschluss **320A** des ersten Halbleiterventils **220** elektrisch leitfähig mit dem ersten Anschluss des ersten Kondensators **202** und elektrisch leitfähig mit dem ersten Anschluss zur DC-Versorgung **365A** verbunden ist; wobei der Anschluss **320B** des vierten Halbleiterventils **220** elektrisch leitfähig mit dem zweiten Anschluss des zweiten Kondensators **202** und elektrisch leitfähig mit dem dritten Anschluss zur DC-Versorgung **365C** verbunden ist; wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **365B** und elektrisch leitfähig, mit dem Anschluss **320A** des zweiten Halbleiterventils **220** verbunden ist; wobei der Anschluss **320B** des ersten Halbleiterventils **220** elektrisch leitfähig mit dem ersten Anschluss **320A** des vierten Halbleiterventils **220** und elektrisch leitfähig mit dem ersten Anschluss **320A** des dritten Halbleiterventils **220** und elektrisch leitfähig mit dem Anschluss **365D** verbunden ist; wobei der Anschluss **320B** des zweiten Halbleiterventils **220** elektrisch leitfähig mit dem Anschluss **320B** des dritten Halbleiterventils **220** verbunden ist.

**Fig. 9** zeigt eine weitere Ausführungsform der ersten dreiphasigen Stromrichterschaltung **115,** umfassend einen dreiphasigen Anschluss **120** und optional einen Anschluss zur DC-Versorgung **175,** wobei die Stromrichterschaltung **115** umfasst: Drei einphasige 3-L-TNPC **265,** die an ihren DC-Anschlüssen **265A, 265B, 265C** elektrisch leitfähig miteinander verbunden sind, wobei der optionale DC-Anschluss zur Versorgung **175** elektrisch leitfähig mit den DC-Anschlüssen **364A** und **364C** verbunden ist und deren Anschlüsse **265D** elektrisch leitfähig mit dem dreiphasigen Anschluss **120** der Stromrichterschaltung verbunden sind, wobei die erste dreiphasige Stromrichterschaltung **115** hier mit einem optionalen, elektrisch leitfähigen Anschluss zur DC-Versorgung **175** schematisch dargestellt ist, jedoch auch ohne diesen ausgeführt sein kann, in diesem Fall entfällt der elektrisch leitfähige Anschluss zur DC-Versorgung **175** der ersten dreiphasigen Stromrichterschaltung **115.**

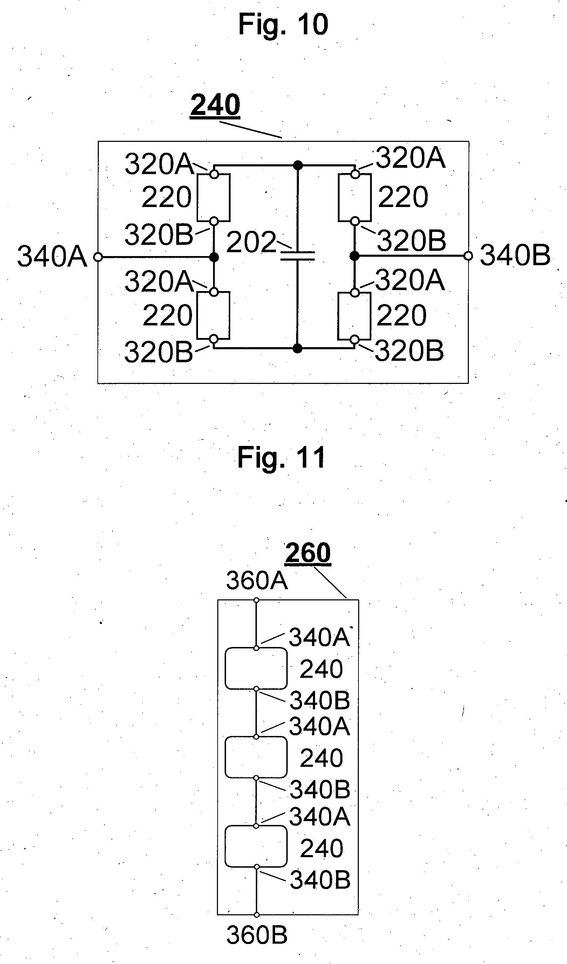

**Fig. 10** zeigt eine weitere Ausführungsform einer Vollbrückenschaltung **240,** umfassend einen ersten elektrisch leitfähigen Anschluss **340A** und einen zweiten elektrisch leitfähigen Anschluss **340B;** wobei die Vollbrückenschaltung **240** umfasst: Ein erstes Halbleiterventil **220,** ein zweites Halbleiterventil **220,** ein drittes Halbleiterventil **220,** ein viertes Halbleiterventil **220,** einen Kondensator **202,** einen ersten elektrisch leitfähigen Anschluss **340A** und einen zweiten elektrisch leitfähigen Anschluss **340B;** wobei der Anschluss **320A** des ersten Halbleiterventils **220** elektrisch leitfähig mit dem ersten Anschluss des Kondensators **202** und elektrisch leitfähig mit dem ersten Anschluss **320A** des dritten Halbleiterventils **220** verbunden ist; wobei der Anschluss **320B** des zweiten Halbleiterventils **220** elektrisch leitfähig mit dem zweiten Anschluss des Kondensators **202** und elektrisch leitfähig mit dem zweiten Anschluss **320B** des vierten Halbleiterventils **220** verbunden ist; wobei der Anschluss **320B** des ersten Halbleiterventils **220** elektrisch leitfähig mit dem ersten Anschluss **320A** des zweiten Halbleiterventils **220** und elektrisch leitfähig mit dem Anschluss **340A** verbunden ist; wobei der Anschluss **320B** des dritten Halbleiterventils **220** elektrisch leitfähig mit dem ersten Anschluss **320A** des vierten Halbleiterventils **220** und elektrisch leitfähig mit dem Anschluss **340B** verbunden ist.

**Fig. 11** zeigt eine weitere Ausführungsform eines Multilevelumrichter Zweigs mit verteiltem Zwischenkreis in Vollbrückenkonfiguration **260,** umfassend einen ersten elektrisch leitfähigen Anschluss **360A** und einen zweiten elektrisch leitfähigen Anschluss **360B;** wobei der MMC Zweig in Vollbrückenkonfiguration **260** umfasst: Eine erste Vollbrückenschaltung **240,** eine zweite Vollbrückenschaltung **240,** eine dritte Vollbrückenschaltung **240,** einen ersten elektrisch leitfähigen Anschluss **360A** und einen zweiten elektrisch leitfähigen Anschluss **360B;** wobei der erste Anschluss **340A** der ersten Vollbrückenschaltung **240** elektrisch leitfähig mit dem Anschluss **360A** verbunden ist; wobei der erste Anschluss **340A** der zweiten Vollbrückenschaltung **240** elektrisch leitfähig mit dem zweiten Anschluss **340B** der ersten Vollbrückenschaltung **240** verbunden ist; wobei der erste Anschluss **340A** der dritten Vollbrückenschaltung **240** elektrisch leitfähig mit dem zweiten Anschluss **340B** der zweiten Vollbrückenschaltung **240** verbunden ist; wobei der zweite Anschluss **340B** der dritten Vollbrückenschaltung **240** elektrisch leitfähig mit dem Anschluss **360B** verbunden ist; wobei die hier gezeigte Schaltung drei Zellen in Vollbrückenkonfiguration (d.h. drei Zellen mit Vollbrückenschaltung **240**) aufweist. Die Zellenanzahl kann auch beliebig sein bzw. insbesondere 1, 2, 3, 4, 5 oder n betragen, wobei n eine beliebige natürliche Zahl repräsentiert.

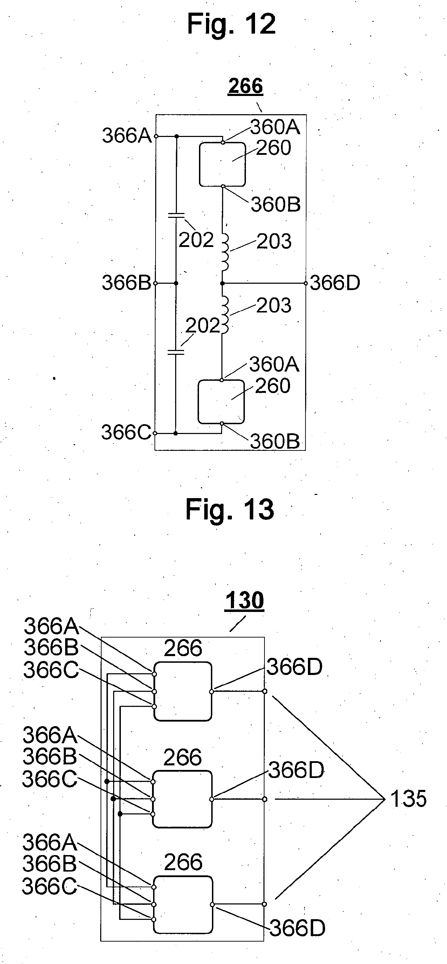

**Fig.12** zeigt eine weitere Ausführungsform eines einphasigen Modularen Multilevel Converters (MMC) mit Zweigen in Vollbrückenkonfiguration **266**, umfassend drei elektrisch leitfähige Anschlüsse **366A**, **366B** und **366C** zur DC-Versorgung und einen elektrisch leitfähigen Anschluss **366D**; wobei der einphasige Modularen Multilevel Converter mit Zweigen in Vollbrückenkonfiguration **266** umfasst: Einen ersten Multilevelumrichter Zweig in Vollbrückenkonfiguration **260**, einen zweiten Multilevelumrichter Zweig in Vollbrückenkonfiguration **260**, eine erste Drossel **203**, eine zweite Drossel **203**, einen ersten Kondensator **202**, einen zweiten Kondensator **202**, einen ersten elektrisch leitfähigen Anschluss zur DC-Versorgung **366A**, einen zweiten elektrisch leitfähigen Anschluss zur DC-Versorgung **366B**, einen dritten elektrisch leitfähigen Anschluss zur DC-Versorgung **366C** und einen elektrisch leitfähigen Anschluss **366D**; wobei der Anschluss **360A** des ersten Multilevelumrichter Zweigs in Vollbrückenkonfiguration **260** elektrisch leitfähig mit dem ersten Anschluss des ersten Kondensators **202** und elektrisch leitfähig mit dem ersten Anschluss zur DC-Versorgung **366A** verbunden ist; wobei der Anschluss **360B** des zweiten Multilevelumrichter Zweigs in Vollbrückenkonfiguration **260** elektrisch leitfähig mit dem zweiten Anschluss des zweiten Kondensators **202** und elektrisch leitfähig mit dem dritten Anschluss zur DC-Versorgung **366C** verbunden ist, wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **366B** verbunden ist; wobei der Anschluss **360B** des ersten Multile-velumrichter Zweigs in Vollbrückenkonfiguration **260** elektrisch leitfähig mit dem ersten Anschluss der ersten Drossel **203** verbunden ist; wobei der Anschluss **360A** des zweiten Multilevelumrichter Zweigs in Vollbrückenkonfiguration **260** elektrisch leitfähig mit dem zweiten Anschluss der zweiten Drossel **203** verbunden ist; wobei der zweite Anschluss der ersten Drossel **203** elektrisch leitfähig mit dem ersten Anschluss der zweiten Drossel **203** und elektrisch leitfähig mit dem Anschluss **366D** verbunden ist, wobei die Schaltung **266** hier mit Mittelpunkt und zentralem Zwischenkreis bestehend aus dem ersten Kondensator **202** und dem zweiten Kondensator **202** dargestellt ist, jedoch auch ohne diese ausgeführt werden kann, in diesem Fall entfallen der zweite elektrisch leitfähige Anschluss zur DC-Versorgung **366B** und der erste Kondensator **202** sowie der zweite Kondensator **202.**

**Fig. 13** zeigt eine weitere Ausführungsform der zweiten dreiphasigen Stromrichterschaltung **130**, umfassend einen dreiphasigen Anschluss **135**, wobei die Stromrichterschaltung **130** umfasst: Drei Phasen **266** eines Modularen Multilevel Converters in Vollbrückenkonfiguration; wobei deren DC-Anschlüsse **366A**, **366B**, **366C** jeweils elektrisch leitfähig miteinander verbunden sind und deren Anschlüsse **366D** jeweils eine Phase des dreiphasigen Anschlusses **135** der Stromrichterschaltung **130** bilden, wobei die Schaltungen **266** hier mit Mittelpunkt dargestellt sind, jedoch auch ohne diesen ausgeführt werden können, in diesem Fall entfällt der zweite elektrisch leitfähige Anschluss zur DC-Versorgung **366B** der Schaltungen **266.**

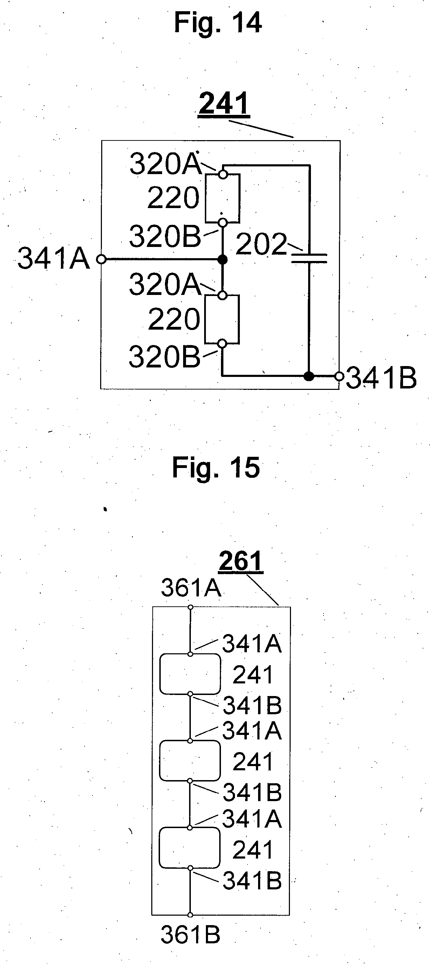

**Fig. 14** zeigt eine weitere Ausführungsform einer Halbbrückenschaltung **241**, umfassend einen ersten elektrisch leitfähigen Anschluss **341A** und einen zweiten elektrisch leitfähigen Anschluss **341B**, wobei die Halbbrückenschaltung **241** umfasst: Ein erstes Halbleiterventil **220**, ein zweites Halbleiterventil **220**, einen Kondensator **202**, einen ersten elektrisch leitfähigen Anschluss **341A** und einen zweiten elektrisch leitfähigen Anschluss **341B**; wobei der Anschluss **320A** des ersten Halbleiterventils **220** elektrisch leitfähig mit dem ersten Anschluss des Kondensators **202** verbunden ist; wobei der Anschluss **320B** des zweiten Halbleiterventils **220** elektrisch leitfähig mit dem zweiten Anschluss des Kondensators **202** und elektrisch leitfähig mit dem Anschluss **341B** verbunden ist; wobei der Anschluss **320B** des ersten Halbleiterventils **220** elektrisch leitfähig mit dem Anschluss **320A** des zweiten Halbleiterventils **220** und elektrisch leitfähig mit dem Anschluss **341A** verbunden ist.

**Fig. 15** zeigt eine weitere Ausführungsform eines Multilevelumrichter Zweigs mit verteiltem Zwischenkreis in Halbbrückenkonfiguration **261**, umfassend einen ersten elektrisch leitfähigen Anschluss **361A** und einen zweiten elektrisch leitfähigen Anschluss **361B**; wobei der Multilevelumrichter Zweig in Halbbrückenkonfiguration **261** umfasst: Eine erste Halbbrückenschaltung **241**, eine zweite Halbbrückenschaltung **241**, eine dritte Halbbrückenschaltung **241**, einen ersten elektrisch leitfähigen Anschluss **361A** und einen zweiten elektrisch leitfähigen Anschluss **361B**; wobei der erste Anschluss **341A** der ersten Halbbrückenschaltung **241** elektrisch leitfähig mit dem Anschluss **361A** verbunden ist; wobei der erste Anschluss **341A** der zweiten Halbbrückenschaltung **241** elektrisch leitfähig mit dem zweiten Anschluss **341B** der ersten Halbbrückenschaltung **241** verbunden ist; wobei der erste Anschluss **341A** der dritten Halbbrückenschaltung **241** elektrisch-leitfähig mit dem zweiten Anschluss **341B** der zweiten Halbbrückenschaltung **241** verbunden ist; wobei der zweite Anschluss **341B** der dritten Halbbrückenschaltung **241** elektrisch leitfähig mit dem Anschluss **361B** verbunden ist; wobei die hier gezeigte Schaltung drei Zellen in.Halbbrückenkonfiguration (Bezeichnung 241)aufweist. Die Zellenanzahl kann auch 2,4,5, n betragen;

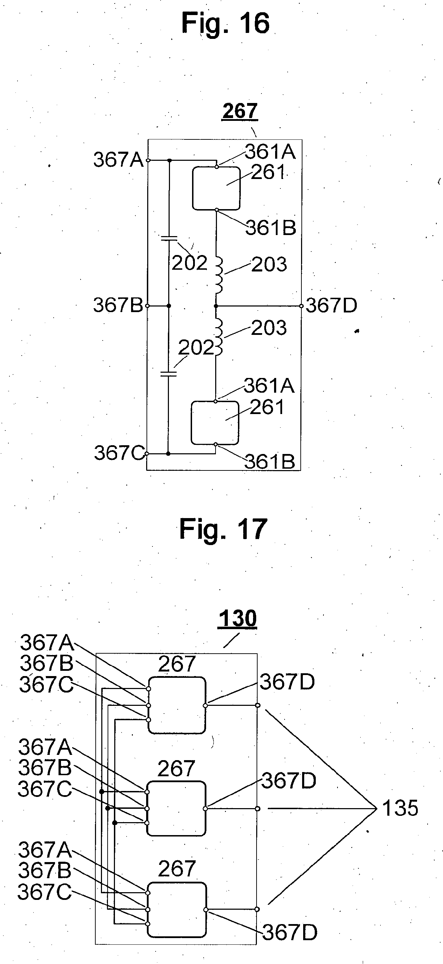

**Fig. 16** zeigt eine weitere Ausführungsform eines einphasigen Modularen Multilevel Converters (MMC) mit Zweigen in Halbbrücken-konfiguration **267**, umfassend drei elektrisch leitfähige Anschlüsse **367A**, **367B** und **367C** zur DC-Versorgung und einen elektrisch leitfähigen Anschluss **367D**; wobei der einphasige Modulare Multilevel Converter mit Zweigen in Halbbrückenkonfiguration **267** umfasst: Einen ersten Multilevelumrichter Zweig in Halbbrückenkonfiguration **261**, einen zweiten Multilevelumrichter Zweig in Halbbrückenkonfiguration**261**, eine erste Drossel **203**, eine zweite Drossel **203**, einen ersten Kondensator **202**, einen zweiten Kondensator **202**, einen ersten elektrisch leitfähigen Anschluss zur DC-Versorgung **367A**, einen zweiten elektrisch leitfähigen Anschluss zur DC-Versorgung **367B**, einen dritten elektrisch leitfähigen Anschluss zur DC-Versorgung **367C** und einen elektrisch leitfähigen Anschluss **367D**; wobei der Anschluss **361A** des ersten Multilevelumrichterzweigs in Halbbrückenkonfiguration **261** elektrisch leitfähig mit dem ersten Anschluss des ersten Kondensators **202** und elektrisch leitfähig mit dem ersten Anschluss zur DC-Versorgung **367A** verbunden ist; wobei der Anschluss **361B** des zweiten Multilevelumrichterzweigs in Halbbrückenkonfiguration **261** elektrisch leitfähig mit dem zweiten. Anschluss des zweiten Kondensators **202** und elektrisch leitfähig mit dem dritten Anschluss zur DC-Versorgung **367C** verbunden ist; wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **367B** verbunden ist; wobei der Anschluss **361B** des ersten Multilevelumrichterzweigs in Halbbrückenkonfiguration **261** elektrisch leitfähig mit dem ersten Anschluss der ersten Drossel **203** verbunden ist; wobei der Anschluss **361A** des zweiten Multilevelumrichterzweigs in Halbbrückenkonfiguration **261** elektrisch leitfähig mit dem zweiten Anschluss der zweiten Drossel **203** verbunden ist; wobei der zweite Anschluss der ersten Drossel **203** elektrisch leitfähig mit dem ersten Anschluss der zweiten Drossel **203** und elektrisch leitfähig mit dem Anschluss **367D** verbunden ist, wobei die Schaltung **267** hier mit Mittelpunkt und zentralem Zwischenkreis bestehend aus dem ersten Kondensator **202** und dem zweiten Kondensator **202** dargestellt ist, jedoch auch ohne diese ausgeführt werden kann, in diesem Fall entfallen der zweite elektrisch leitfähige Anschluss zur DC-Versorgung **367B** und der erste Kondensator **202** sowie der zweite Kondensator **202.**

**Fig. 17** zeigt eine weitere Ausführungsform der zweiten dreiphasigen Stromrichterschaltung **130**, umfassend einen dreiphasigen Anschluss **135**, wobei die Stromrichterschaltung **130** umfasst: Drei Phasen **267** eines Modularen Multilevel Converters in Halbbrückenkonfiguration; wobei deren DC-Anschlüsse **367A**, **367B**, **367C** jeweils elektrisch leitfähig miteinander verbunden sind und deren Anschlüsse **367D** jeweils eine Phase des dreiphasigen Anschlusses **135** der Stromrichterschaltung **130** bilden, wobei die Schaltungen **267** hier mit Mittelpunkt dargestellt sind, jedoch auch ohne diesen ausgeführt werden können, in diesem Fall entfällt der zweite elektrisch leitfähige Anschluss zur DC-Versorgung **367B** der Schaltungen **267.**

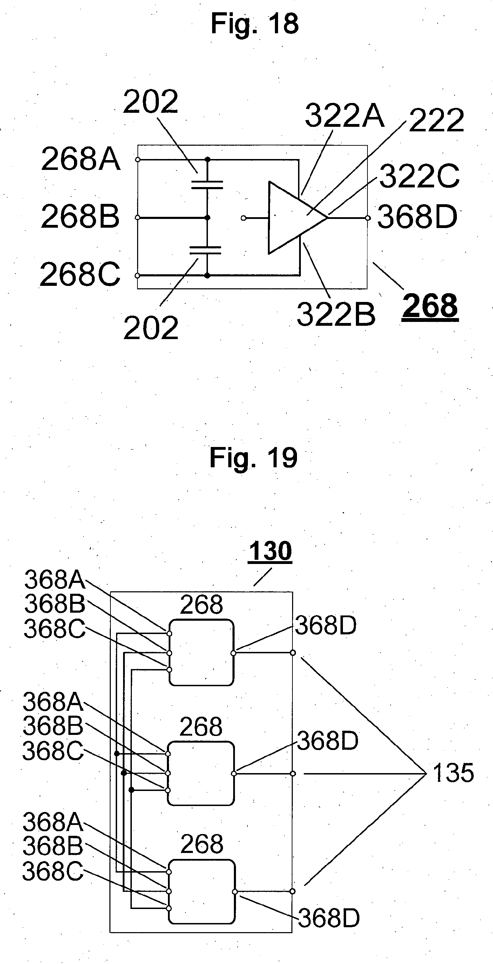

**Fig. 18** zeigt das Ersatzschaltbild einer möglichen Ausführungsform einer einphasigen Linearverstärkerschaltung **268**, umfassend drei elektrisch leitfähige Anschlüsse **368A**, **368B** und **368C** zur DC-Versorgung und einen elektrisch leitfähigen Anschluss **368D**; wobei die einphasige Linearverstärkerschaltung **268** umfasst: Einen Linearverstärker **222**, einen ersten Kondensator **202**, einen zweiten Kondensator **202**, einen ersten elektrisch leitfähigen Anschluss zur DC-Versorgung **368A**, einen zweiten elektrisch leitfähigen Anschluss zur DC-Versorgung **368B**, einen dritten elektrisch leitfähigen Anschluss zur DC-Versorgung **368C** und einen elektrisch leitfähigen Anschluss **368D;** wobei der Anschluss **322A** des Linearverstärkers **222** elektrisch leitfähig mit dem ersten Anschluss des ersten Kondensators **202** und elektrisch leitfähig mit dem ersten Anschluss zur DC-Versorgung **368A** verbunden ist; wobei der Anschluss **322B** des Linearverstärkers **222** elektrisch leitfähig mit dem zweiten Anschluss des zweiten Kondensators **202** und elektrisch leitfähig mit dem dritten Anschluss zur DC-Versorgung **368C** verbunden ist; wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **368B** verbunden ist; wobei der Anschluss **322C** des Linearverstärkers **222** elektrisch leitfähig mit dem Anschluss **368D** verbunden ist.

**Fig. 19** zeigteine weitere Ausführungsform der zweiten dreiphasigen Stromrichterschaltung **130**, umfassend einen dreiphasigen Anschluss **135**, wobei die Stromrichterschaltung **130** umfasst: Drei Phasen **268** einer einphasigen Linearverstärkerschaltung; wobei deren DC-Anschlüsse **368A**, **368B**, **368C** jeweils elektrisch leitfähig miteinander verbunden sind und deren Anschlüsse **368D** jeweils eine Phase des dreiphasigen Anschlusses **135** der Stromrichterschaltung **130** bilden.

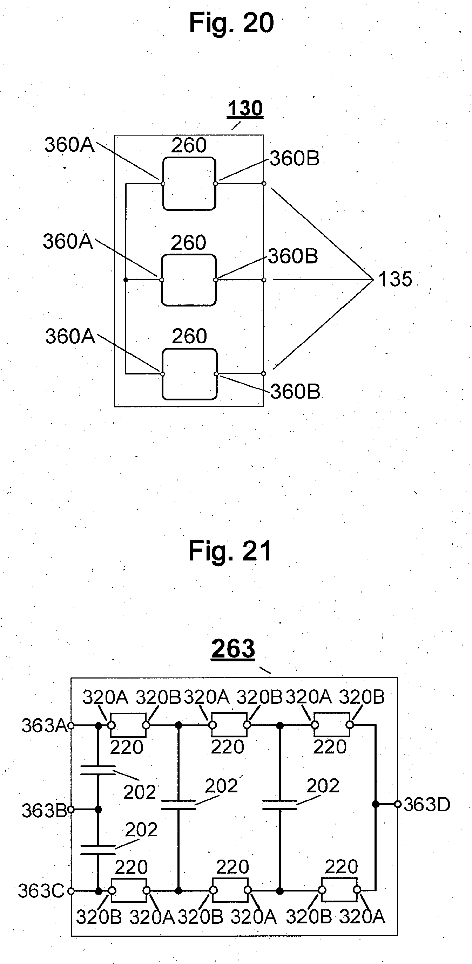

**Fig. 20** zeigt eine weitere Ausführungsform der zweiten dreiphasigen Stromrichterschaltung **130**, umfassend einen dreiphasigen Anschluss **135**, wobei die Stromrichterschaltung **130** umfasst: Drei Phasen **260** eines Multilevelumrichter Zweigs in Vollbrückenkonfiguration; wobei deren Anschlüsse **360A** elektrisch leitfähig miteinander verbunden sind und deren Anschlüsse **360B** jeweils eine Phase des dreiphasigen Anschlusses **135** der Stromrichterschaltung **130** bilden.

**Fig. 21** zeigt eine weitere Ausführungsform eines einphasigen 5-L-Flying Capacitor Converters (5-L-FLC) **263**, umfassend drei elektrisch leitfähige Anschlüsse **363A**, **363B** und **363C** zur DC-Versorgung und einen elektrisch leitfähigen Anschluss **363D**; wobei der 5-L-FLC **263** umfasst: Ein erstes Halbleiterventil **220**, ein zweites Halbleiterventil **220**, ein drittes Halbleiterventil **220**, ein viertes Halbleiterventil **220**, ein fünftes Halbleiterventil **220**, ein sechstes Halbleiterventil **220**, einen ersten Kondensator **202**, einen zweiten Kondensator **202**, einen dritten Kondensator **202**, einen vierten Kondensator **202**, einen ersten elektrisch leitfähigen Anschluss zur DC-Versorgung **363A**, einen, zweiten elektrisch leitfähigen Anschluss zur DC-Versorgung **363B**, einen dritten elektrisch leitfähigen Anschluss zur DC-Versorgung **363C** und einen elektrisch leitfähigen Anschluss **363D**; wobei der Anschluss **320A** des ersten Halbleiterventils **220** elektrisch leitfähig mit dem ersten Anschluss des eisten kondensators **202** und elektrisch leitfähig mit dem ersten Anschluss zur DC-Versorgung **363A** verbunden ist; wobei der Anschluss **320B** des sechsten Halbleiterventils **220** elektrisch leitfähig mit dem zweiten Anschluss des zweiten Kondensators **202** und elektrisch leitfähig mit dem dritten Anschluss zur DC-Versorgung **363C** verbunden ist; wobei der zweite Anschluss des ersten Kondensators **202** elektrisch leitfähig mit dem ersten Anschluss des zweiten Kondensators **202** und elektrisch leitfähig mit dem zweiten Anschluss zur DC-Versorgung **363B** verbunden ist; wobei der Anschluss **320B** des ersten Halbleiterventils **220** elektrisch leitfähig mit dem ersten Anschluss des dritten Kondensators **202** und elektrisch leitfähig mit dem Anschluss **320A** des zweiten Halbleiterventils **220** verbunden ist; wobei der Anschluss **320A** des sechsten Halbleiterventils**220** elektrisch leitfähig mit dem zweiten Anschluss des dritten Kondensators **202** und elektrisch leitfähig mit dem Anschluss **320B** des fünften Halbleiterventils **220** verbunden ist; wobei der Anschluss **320B** des zweiten Halbleiterventils **220** elektrisch leitfähig mit dem ersten Anschluss des vierten Kondensators **202** und elektrisch leitfähig mit dem Anschluss **320A** des dritten Halbleiterventils **220** verbunden ist; wobei der Anschluss **320A** des fünften Halbleiterventils **220** elektrisch leitfähig mit dem zweiten Anschluss des vierten Kondensators **202** und elektrisch leitfähig mit dem Anschluss **320B** des vierten Halbleiterventils **220** verbunden ist; wobei der Anschluss **320B** des dritten Halbleiterventils **220** elektrisch leitfähig mit dem Anschluss **363D** und elektrisch leitfähig mit dem Anschluss **320A** des vierten Halbleiterventils **220** verbunden ist

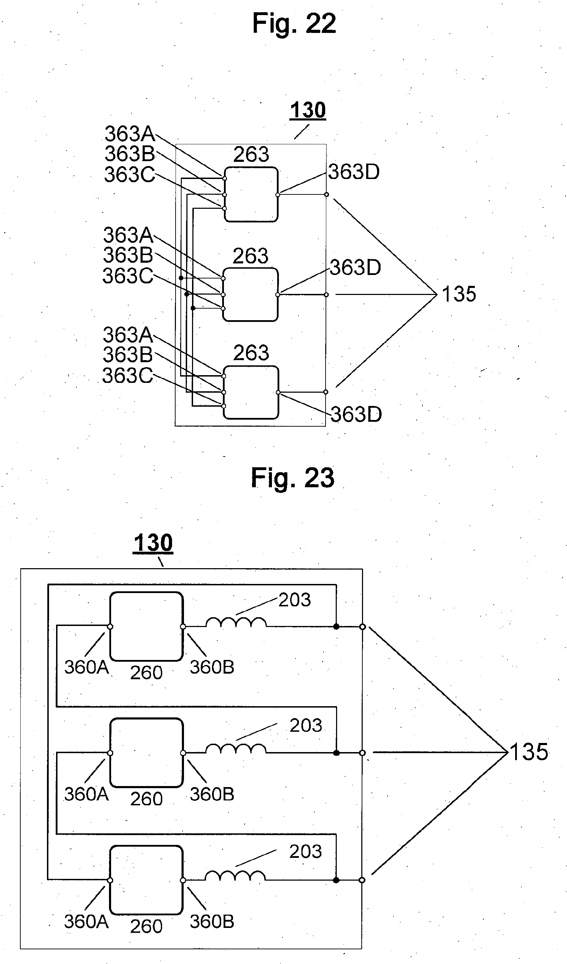

**Fig. 22** zeigt eine weitere Ausführungsform der zweiten dreiphasigen Stromrichterschaltung **130**, umfassend einen dreiphasigen Anschluss **135**, wobei die Stromrichterschaltung **130** umfasst: Drei Phasen **263** eines einphasigen 5-L-Flying Capacitor Converters (5-L-FLC); wobei deren DC-Anschlüsse **363A**, **363B**, **363C** jeweils elektrisch leitfähig miteinander verbunden sind und deren Anschlüsse **363D** jeweils eine Phase des dreiphasigen Anschlusses **135** der Stromrichterschaltung **130** bilden.

**Fig. 23** zeigt eine weitere Ausführüngsform der zweiten dreiphasigen Stromrichterschaltung **130**, umfassend einen elektrisch leitfähigen dreiphasigen Anschluss **135**; wobei die Stromrichterschaltung **130** umfasst: Einen ersten Multilevelumrichterzweig in Vollbrückenkonfiguration **260**, einen zweiten Multilevelumrichterzweig in Vollbrückenkonfiguration **260**, einen dritten Multilevelumrichterzweig in Vollbrückenkonfiguration **260**, eine erste Drossel **203**, eine zweite Drossel **203**, eine dritte Drossel **203** und einen elektrisch leitfähigen dreiphasigen Anschluss **135**; wobei der Anschluss **360A** des ersten Multilevelumrichterzweigs in Vollbrückenkonfiguration **260** elektrisch leitfähig mit dem zweiten Anschluss der zweiten Drossel **203** und elektrisch leitfähig mit der zweiten Phase des dreiphasigen Anschlusses **135** verbunden ist; wobei der Anschluss **360B** des ersten Multilevelumrichterzweigs in Vollbrückenkonfiguration **260** elektrisch leitfähig mit dem ersten Anschluss der ersten Drossel **203** verbunden ist; wobei der Anschluss **360A** des zweiten Multilevelumrichterzweigs in Vollbrückenkonfiguration **260** elektrisch leitfähig mit dem zweiten Anschluss der dritten Drossel **203** und elektrisch leitfähig mit der dritten Phase des dreiphasigen Anschlusses **135** verbunden ist; wobei der Anschluss **360B** des zweiten Multilevelumrichterzweigs in Vollbrückenkonfiguration **260** elektrisch leitfähig mit dem ersten Anschluss der zweiten Drossel **203** verbunden ist; wobei der Anschluss **360A** des dritten Multilevelumrichterzweigs in Vollbrückenkonfiguration **260** elektrisch leitfähig mit dem zweiten Anschluss der ersten Drossel **203** und elektrisch leitfähig mit der ersten Phase des dreiphasigen Anschlusses **135** verbunden ist; wobei der Anschluss **360B** des dritten Multilevelumrichterzweigs in Vollbrückenkonfiguration **260** elektrisch leitfähig mit dem ersten Anschluss der dritten Drossel **203** verbunden ist.

### Literaturverzeichnis

[1] S. Rohner, "Untersuchung des Modularen Mehrpunktstromrichters M2C für Mittelspannungsanwendungen", Dissertation, TU Dresden, 2010.
[2] D. Krug, "Vergleichende Untersuchungen von Mehrpunkt-Schaltungstopologien", Dissertation, TU Dresden, 2015.
[3] Lopez Arevalo, "Matrix converter for frequency changing power supply applications", Dissertation, The University of Nottingham, Nottingham, 2008.
[4] S. Bernet, S. Ponnaluri and R. Teichmann, "Design and loss comparison of matrix converters, and voltage-source converters for modern AC drives," in IEEE Transactions on Industrial Electronics, vol. 49, no. 2, pp. 304-314, Apr 2002.
[5] K. Ma, "Power electronics for the hext generation wind turbine system", Cham: Springer, 2015.
[6] F. Zach, "Leistungselektronik, Ein Handbuch", Kap. 16.7 "Aktive Rippelkompensation", Wien: Springer-Verlag, 2010.
[7] A. Kamenka, "Sechs Themen rund um Oberschwingungen und die Netzqualität in Stromversorgungsnetzen: Ein Whitepaperder Schaffner Gruppe", Schaffner Group, 2014.
[8] P. Dey and S. Mekhilef, "Current Controllers of Active Power Filter for Power Quality Improvement: A Technical Analysis", Automatika Journal, vol. 56, no. 1, 2015.
[9] P. Matthes, "Verbesserung der Netzqualität durch aktive . harmonische Filter", Vortragsreihe "Verein der SRT-Freunde", Apr. 30th, 2015.
**[10]** A. Jacob, B. T. Abraham, N. Prakash, and R. Philip, "A Review of Active Power Filters In Power System Applications", International Journal of Advanced Research in Electrical, Electronics and Instrumentation Engineering, no. Vol. 3, Issue 6, pp. 10253-10261, 2014.
[11] G. B. Yundt, "Series- or Parallel-Connected Composite Amplifiers", IEEE Trans. Power Electron., vol. PE-1, no. 1, pp. 48-54, 1986, http://ieeeplore.ieee.org/ielx5/63/- 4766266/04766276.pdf?tp=&arnumber=4766276&isnumber=-4766266.
[12] J.-C. Lucas and Y. Sontag,"Zerhackerverstärkerschaltung zur Versorgung eines Stroms, der proportional zu einer Spannung ist und eine elektromagnetische Ablenkeinheit, die eine solche verwendet", Deutsches Patent DE 691 01 202 T2.
[13] J. W. Kolar and J. Ertl, "Breitband-Hybrid-Leistüngsverstärker mit Hohem Wirkungsgrad", AT 404 892 B, Österreich 445/95, Mar. 25^{th}, 1999.
[14] H. Ertl, J. W. Kolar, and F. C. Zach, "A New 1 kW Class-D Supported Linear Power Amplifier Employing a Self-Adjusting Ripple Cancellation Scheme", International Conference on Power Conversion, Nürnberg, Germany, vol. 29, 265-274, 1996.
[15] H. Ertl, J. W. Kolar, and F. C. Zach, "A Novel Switch-Mode Power Amplifier with High Output Voltage Quality Employing a Hybrid Output Filter," International Conference on Power Conversion, Nürnberg, Germany, vol. 34, 419-428, 1997.
[16] G. Gong, H. Ertl, and J. W. Kolar, "A Multi-Cell Cascaded Power Amplifier: 19 - 23 March 2006", [Dallas, TX]. Piscataway, NJ: IEEE Operations Center, 2006.
**[17]** J. W. Kolar and J. Ertl, "Multizellen Hybrid-Leistungsverstärker zur Realisierung einer verlustarmen Testspannung geringen Innenwiderstandes und hoher Bandbreite", Schweizer Patent CH 698 432 B1, 00873/05.
[18] G. S. da Silva, R. C. Beltrame, L. Schüch, and C. Rech, "Hybrid AC Power Source Based on ModularMultilevel Converter and Linear Amplifier", IEEE Trans. PowerElectron., vol. 30, no. 1, pp. 216-226, 2015.
[19] A. M. Trznadlowski, F. Blaabjerg, J. K. Pedersen, and N. Patriciu, "The tandem inverter: Combining the advantages of voltage-source and current-source inverters", pp. 315-320.
[20] A. M. Trzynadlowski, N. Patriciu, F. Blaabjerg, and J. K. Pedersen, "A hybrid, current-source/voltage-source power inverter circuit". IEEE Trans. Power Electron., pp. 866-871.
**[21]** Y. Sato, K. Kawamura, H. Morimoto, and K. Nezu, "Hybrid PWM rectifiers to reduce electromagnetic interference", pp. 2141-2146.
[22] J. E. Huber, J. W. Kolar and G. Pammer, "Hybrid inverter concept for extreme bandwidth high-power AC source", Electronic Letters, 2017, vol. 53, DOI: 10.1049/el.2017.1064.

### Bezugszeichenliste

- **100A, 100B**: Vorrichtung
- **105**: Schaltungsanordnung
- **110**: Ein dreiphasiger Anschluss der Schaltungsanordnung **105**
- **115**: Eine erste dreiphasige Stromrichterschaltung
- **120**: Ein dreiphasiger Anschluss der ersten dreiphasigen Stromrichterschaltung **115**
- **125**: Kommunikationsschnittstelle der ersten dreiphasigen Stromrichterschaltung **115**
- **130**: Eine zweite dreiphasige Stromrichterschaltung
- **135**: Ein dreiphasiger Anschluss der zweiten dreiphasigen Stromrichterschaltung **130**
- **140**: Kommunikationsschnittstelle der zweiten dreiphasigen Stromrichterschaltung **130**
- **145**: Kopplungseinheit
- **150**: Ein erster dreiphasiger Anschluss der Kopplungseinheit **145**
- **155**: Ein zweiter dreiphasiger Anschluss der Kopplungseinheit **145**
- **160A**, **160B**: Steuer- oder Regeleinheit
- **165A**, **165B**: Kommunikationsschnittstelle der Steuer- oder Regeleinheit **160A** oder **160B**
- **170**: Optionaler Anschluss zur DC-Versorgung der Schaltungsanordnung **105**
- **175**: Optionaler Anschluss zur DC-Versorgung der ersten dreiphasigen Stromrichterschaltung **115**
- **200**: Abschaltbarer Halbleiterschalter, wobei dieser Halbleiterschalter hier als Irisulated-Gate-Bipolar-Transistor (IGBT) ausgeführt ist, jedoch auch ein MOS-Feldeffekttransistor (MOSFET), Bipolartransistor, Gate-Turn-Off-Thyristor (GTO) oder Integrated-Gate-Commutated-Thyristor (IGCT) verwendet werden kann
- **201**: Halbleiterdiode
- **303A**, **303B**: Einphasiger elektrisch leitfähiger Anschluss von **300**
- **202**: Kondensator
- **203**: Drossel
- **220**: Halbleiterventil bestehend aus einem abschaltbarer Halbleiterschalter **200**, einer Halbleiterdiode **201**, einem ersten elektrisch leitfähigen Anschluss **320A** und einem zweiten elektrisch leitfähigen Anschluss **320B**
- **222**: Linearverstärker
- **240**: Vollbrückenschaltung bestehend aus vier Halbleiterventilen **220**, einem Kondensator **202**, einem ersten elektrisch leitfähigen Anschluss **340A** und einem zweiten elektrisch leitfähigen Anschluss **340B**
- **241**: Halbbrückenschaltung bestehend aus zwei Halbleiterventilen **220**, einem Kondensator **202**, einem ersten elektrisch leitfähigen Anschluss **341A** und einem zweiten elektrisch leitfähigen Anschluss **341B**
- **260**: Drei kaskadierte Vollbrückenschaltungen **240**
- **261**: Drei kaskadierte Halbbrückenschaltungen **241**
- **262**: Einphasiger 2-L-Voltage Source DC-AC Converter
- **263**: 5-L-Flying Capacitor Converter (FLC)
- **264**: Einphasiger 3-L-Neutral Point Clamped Converter
- **265**: Einphasiger 3-L-T-type-Neutral Point Clamped Converter
- **266**: Einphasiger Modularer Multilevel Converter (MMC) mit zwei kaskadierten Vollbrücken-Submodulen **260** und zwei Drosseln **203** bzw. mit zwei optionalen Kondensatoren **202**
- **267**: Einphasiger Modularer Multilevel Converter (MMC) mit zwei kaskadierten Halbbrücken-Submodulen **261** und zwei Drosseln **203** bzw. mit zwei optionalen Kondensatoren **202**
- **268**: Linearverstärkerschaltung mit einem Linearverstärker **222** und zwei Kondensatoren **202**
- **320A**, **320B**: Elektrisch leitfähiger Anschluss von **220**
- **322A**, **322B**: Elektrisch leitfähiger Anschluss zur DC-Versorgung des Linearverstärkers **222**
- **322C**: Elektrisch leitfähiger Anschluss des Linearverstärkers **222**
- **340A**, **340B**: Elektrisch leitfähiger Anschluss von **240**
- **341A**, **341B**: Elektrisch leitfähiger Anschluss von **241**
- **360A**, **360B**: Elektrisch leitfähiger Anschluss von **260**
- **361A**, **361B**: Elektrisch leitfähiger Anschluss von **261**
- **362A**, **362B**, **362C**: Elektrisch leitfähiger Anschluss zur DC-Versorgung des einphasigen 2-L-Voltage Source DC-AC Converter
- **362D**: Elektrisch leitfähiger Anschluss des 2-L-Voltage Source DC-AC Converter
- **363A**, **363B. 363C**: Elektrisch leitfähiger Anschluss zur DC-Versorgung des 5-L-Flying Capacitor Converter (FLC)
- **363D**: Elektrisch leitfähiger Anschluss des 5-L-Flying Capacitor Converter (FLC)
- **364A**, **364B**, **364C**: Elektrisch leitfähiger Anschluss zur DC-Versorgung des einphasigen 3-L-Neutral Point Clamped Converter
- **364D**: Elektrisch leitfähiger Anschluss des 3-L-Neutral Point Clamped Converter
- **365A, 365B, 365C**: Elektrisch leitfähiger Anschluss zur DC-Versorgung des einphasigen 3-L-T-type-Neutral Point Clamped Converter
- **365D**: Elektrisch leitfähiger Anschluss des 3-L-T-type-Neutral Point Clamped Converter
- **366A**, **366B**, **366C**: Elektrisch leitfähiger Anschluss zur DC-Versorgung eines einphasigen Modularer Multilevel Converters (MMC) **-266**
- **366D**: Elektrisch leitfähiger Anschluss eines Modularer Multilevel Converters (MMC) **266**
- **367A**, **367B**, **367C**: Elektrisch leitfähiger Anschluss zur DC-Versorgung eines einphasigen Modularer Multilevel Converters (MMC) **267**
- **367D**: Elektrisch leitfähiger Anschluss eines Modularer Multilevel Converters (MMC) **267**
- **368A**, **368B**, **368C**: Elektrisch leitfähiger Anschluss zur DC-Versorgung der Linearverstärkerschaltung **268**
- **368D**: Elektrisch leitfähiger Anschluss der Line-arverstärkerschaltung **268**

## Patentansprüche

1. Vorrichtung **(100A**, **100B)**, umfassend eine Schaltungsanordnung **(105)** mit mindestens einem dreiphasigen Anschluss **(110)**, wobei die Schaltungsanordnung **(105)** umfasst:
1.1. eine erste dreiphasige Stromrichterschaltung **(115)**, umfassend
1.1.1. einen dreiphasigen Anschluss **(120)** und
1.1.2. eine Kommunikationsschnittstelle **(125)**;
1.2. eine zweite dreiphasige Stromrichterschaltung **(130)**, umfassend
1.2.1. einen dreiphasigen Anschluss **(135)** und
1.2.2. eine Kommunikationsschnittstelle **(140)**;
1.3. eine Kopplungseinheit **(145)**, umfassend
1.3.1. einen ersten dreiphasigen Anschluss **(150)** und
1.3.2. einen zweiten dreiphasigen Anschluss **(155)**; und
entweder
1.4. eine Steuer- oder Regeleinheit **(160)** mit mindestens einer kommunikationsschnittstelle **(165)**;
oder
1.5. eine erste Steuer- oder Regeleinheit **(160A)** mit mindestens einer Kommunikationsschnittstelle **(165A)** und eine zweite Steuer- oder Regeleinheit **(160B)** mit mindestens einer Kommunikationsschnittstelle **(165B)**;
**dadurch gekennzeichnet, dass**
1.6. die erste, dreiphasige Stromrichterschaltung **(115)** und die zweite dreiphasige Stromrichterschaltung **(130)** elektrisch leitfähig über die Kopplungseinheit **(145)** derart miteinander gekoppelt sind, dass
1.6.1. der dreiphasige Anschluss **(120)** der ersten dreiphasigen Stromrichterschaltung **(115)** elektrisch leitfähig mit dem ersten dreiphasigen Anschluss **(150)** der Kopplungseinheit **(145)** gekoppelt ist und der zweite dreiphasige Anschluss **(155)** der Kopplungseinheit **(145)** mit dem dreiphasigen Anschluss **(135)** der zweiten dreiphasigen Stromrichterschaltung **(130)** elektrisch leitfähig gekoppelt ist;
und
1.7. wobei der zweite dreiphasige Anschluss **(155)** der Kopplungseinheit **(145)** und der dreiphasige Anschluss **(135)** der zweiten dreiphasigen Stromrichterschaltung **(130)** elektrisch leitfähig mit dem dreiphasigen Anschluss **(110)** der Schaltungsanordnung **(105)** gekoppelt sind; und wobei
entweder
1.8. die Kommunikationsschnittstelle **(125)** der ersten dreiphasigen Stromrichterschaltung **(115)** und die Kommunikationsschnittstelle **(140)** der zweiten dreiphasigen Stromrichterschaltung **(130)** gemeinsam mit der Kommunikationsschnittstelle **(165)** der Steuer- oder Regeleinheit **(160)** gekoppelt ist;
oder
1.9. die Kommunikationsschnittstelle **(125)** der ersten dreiphasigen Stromrichterschaltung **(115)** mit der Kommunikationsschnittstelle **(165A)** der ersten Regel- oder Steuereinheit **(160A)** gekoppelt ist und die Kommunikationsschnittstelle **(140)** der zweiten dreiphasigen Stromrichterschaltung **(130)** mit der Kommunikationsschnittstelle **(165B)** der zweiten Regel- oder Steuereinheiten **(160B)** gekoppelt ist.
